(19) Europäisches Patentamt

European Patent Office

Office européen des brevets

(11) **EP 4 604 466 A1**

(12) **EUROPEAN PATENT APPLICATION**
published in accordance with Art. 153(4) EPC

(43) Date of publication:
**20.08.2025 Bulletin 2025/34**

(21) Application number: **22961807.9**

(22) Date of filing: **14.10.2022**

(51) International Patent Classification (IPC):
**H04L 27/00** (2006.01)

(52) Cooperative Patent Classification (CPC):
**H04L 27/00**

(86) International application number:
**PCT/CN2022/125500**

(87) International publication number:
**WO 2024/077621 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **LIU, Wendong**
  **Dongguan, Guangdong 523860 (CN)**
• **TIAN, Wenqiang**
  **Dongguan, Guangdong 523860 (CN)**

(74) Representative: **RGTH**
**Patentanwälte PartGmbB**
**Neuer Wall 10**
**20354 Hamburg (DE)**

(54) **CHANNEL INFORMATION FEEDBACK METHOD, TRANSMITTING END DEVICE, AND RECEIVING END DEVICE**

(57) Embodiments of the present disclosure provide a method for channel information feedback, a transmitting-side device and a receiving-side device. Channel information (such as, CSI) feedback may adapt to different channel information input and output dimensions and different feedback payload configurations, which improves the feedback performance of the channel information (such as, CSI), and also improves the flexibility and scalability of the encoding network and the decoding network in the actual deployment. The method for channel information feedback includes: encoding, by a transmitting-side device, first channel information through an encoding network, to obtain a first feedback bitstream; and transmitting, by the transmitting-side device, the first feedback bitstream to a receiving-side device; where the first channel information is channel information aligned with target channel information in a first dimension obtained after pre-processing is performed, and/or the first feedback bitstream is a feedback bitstream aligned with a target feedback bitstream obtained after post-processing is performed on a feedback bitstream output by the encoding network; and the first dimension is at least one of: a number of transmitting antenna ports, a number of sub-bands, a number of RBs, a number of delay paths, a number of symbols, or a number of slots.

200

FIG. 7

EP 4 604 466 A1

## Description

## TECHNICAL FIELD

Embodiments of the present disclosure relate to the field of communications, and more particular, to a method for channel information feedback, a transmitting-side device, and a receiving-side device.

## BACKGROUND

In New Radio (NR) systems, channel state information (CSI) may be fed back based on a codebook. Specifically, according to a high-level signaling configuration, an optimal feedback matrix and corresponding feedback coefficients are selected from a codebook using estimated channels periodically, aperiodically or semi-persistently. However, since the codebook itself is a predefined finite set, that is, a mapping process from the estimated channels to channels in the codebook is quantization-lossy. In addition, a fixed codebook design cannot be dynamically adjusted according to the change of the channel, which causes that accuracy of feedback channel information is decreased, and then performance of precoding is reduced.

## SUMMARY

The embodiments of the present disclosure provide a method for channel information feedback, a transmitting-side device and a receiving-side device. The transmitting-side device may feed back channel information through an encoding network, and the receiving-side device may obtain the channel information fed back by the transmitting-side device through a decoding network. Channel information (such as, CSI) feedback may adapt to different channel information input and output dimensions and different feedback payload configurations, which improves the feedback performance of the channel information (such as, CSI), and also improves the flexibility and scalability of the encoding network and the decoding network in the actual deployment.

In a first aspect, a method for channel information feedback is provided, and the method includes:

encoding, by a transmitting-side device, first channel information through an encoding network, to obtain a first feedback bitstream; and
transmitting, by the transmitting-side device, the first feedback bitstream to a receiving-side device;
where the first channel information is channel information aligned with target channel information in a first dimension obtained after pre-processing is performed, and/or the first feedback bitstream is a feedback bitstream aligned with a target feedback bitstream obtained after post-processing is performed on a feedback bitstream output by the encoding network; and

the first dimension is at least one of: a number of transmitting antenna ports, a number of sub-bands, a number of resource blocks (RBs), a number of delay paths, a number of symbols, or a number of slots.

In a second aspect, a method for channel information feedback is provided, and the method includes:

receiving, by a receiving-side device, a first feedback bitstream transmitted by a transmitting-side device; and
decoding, by the receiving-side device, the first feedback bitstream through a decoding network, to obtain first channel information;
where the first feedback bitstream is a feedback bitstream aligned with a target feedback bitstream obtained after post-processing is performed on a feedback bitstream output by an encoding network corresponding to the decoding network, and/or the first channel information is channel information different from target channel information in a first dimension obtained after post-processing is performed on channel information that is output by the decoding network and aligned with the target channel information in the first dimension; and
the first dimension is at least one of: a number of transmitting antenna ports, a number of sub-bands, a number of RBs, a number of delay paths, a number of symbols, or a number of slots.

In a third aspect, a transmitting-side device is provided to perform the method in the above first aspect.
Specifically, the transmitting-side device includes functional modules to perform the method in the above first aspect.
In a fourth aspect, a receiving-side device is provided to perform the method in the above second aspect.
Specifically, the receiving-side device includes functional modules to perform the method in the above second aspect.
In a fifth aspect, a transmitting-side device is provided, which includes a processor and a memory. The memory is configured to store a computer program, and the processor is configured to call the computer program stored in the memory and run the computer program, to enable the transmitting-side device to perform the method in the above first aspect.
In a sixth aspect, a receiving-side device is provided, which includes a processor and a memory. The memory is configured to store a computer program, and the processor is configured to call the computer program stored in the memory and run the computer program, to enable the receiving-side device to perform the method in the above second aspect.
In a seventh aspect, an apparatus is provided to implement the method in any one of the above first to second aspects.

Specifically, the apparatus includes a processor, and the processor is configured to call a computer program from a memory and run the computer program, to enable a device equipped with the apparatus to perform the method in any one of the above first to second aspects.

In an eighth aspect, a computer-readable storage medium is provided, which is configured to store a computer program, and the computer program enables a computer to perform the method in any one of the above first to second aspects.

In a ninth aspect, a computer program product is provided, which includes computer program instructions. The computer program instructions enable a computer to perform the method in any one of the above first to second aspects.

In a tenth aspect, a computer program is provided. The computer program, when is executed on a computer, enables the computer to perform the method in any one of the above first to second aspects.

Through the above technical solutions, the transmitting-side device encodes the first channel information through the encoding network, to obtain the first feedback bitstream, and the transmitting-side device transmits the first feedback bitstream to the receiving-side device, where the first channel information is the channel information aligned with the target channel information in the first dimension obtained after pre-processing is performed, and/or the first feedback bitstream is the feedback bitstream aligned with the target feedback bitstream obtained after post-processing is performed on the feedback bitstream output by the encoding network. That is, the encoding network supports that the channel information aligned with the target channel information in the first dimensions obtained after pre-processing is performed on the channel information in multiple kinds of first dimensions is taken as the input, and/or the encoding network supports that the feedback bitstreams with multiple kinds of feedback payloads are taken as the outputs; and the transmitting-side device transmits the feedback bitstreams aligned with the target feedback bitstream obtained after post-processing is performed on the feedback bitstreams output by the encoding network to the receiving-side device. The receiving-side device receives the first feedback bitstream transmitted by the transmitting-side device, and the receiving-side device decodes the first feedback bitstream through the decoding network, to obtain the first channel information, where the first feedback bitstream is the feedback bitstream aligned with the target feedback bitstream obtained after post-processing is performed on the feedback bitstream output by the encoding network corresponding to the decoding network, and/or the first channel information is the channel information different from the target channel information in the first dimension obtained after post-processing is performed on the channel information that is output by the decoding network and aligned with the target channel information in the first dimension. That is, the decoding network supports that the feedback bitstreams aligned with the target feedback bitstream obtained after pre-processing is performed on the feedback bitstreams with multiple kinds of feedback payloads are taken as the inputs, and/or after post-processing is performed, the outputs of the decoding network correspond to the channel information in multiple kinds of first dimensions. That is, through the above technical solutions, the channel information (such as, CSI) feedback may adapt to the different channel information input and output dimensions and different feedback payload configurations, which improves the feedback performance of the channel information (such as, CSI), and also improves the flexibility and scalability of the encoding network and the decoding network in the actual deployment.

**BRIEF DESCRIPTION OF THE DRAWINGS**

FIG. 1 is a schematic diagram of a communication system architecture applied to the embodiments of the present disclosure.

FIG. 2 is a schematic diagram of a neuron provided in the present disclosure.

FIG. 3 is a schematic diagram of a neural network provided in the present disclosure.

FIG. 4 is a schematic diagram of a convolutional neural network provided in the present disclosure.

FIG. 5 is a schematic diagram of a long short-term memory (LSTM) unit provided in the present disclosure.

FIG. 6 is a schematic framework diagram of an AI-based CSI autoencoder provided in the present disclosure.

FIG. 7 is a schematic flowchart of a method for channel information feedback provided according to the embodiments of the present disclosure.

FIG. 8 is a schematic diagram of a hybrid iterative training under a scenario of same Configs and different Payloads provided in the embodiments of the present disclosure.

FIG. 9 is a schematic diagram of a scenario of a same encoding network and different decoding networks, under different Configs provided in the embodiments of the present disclosure.

FIG. 10 is a schematic diagram of a hybrid iterative training under a scenario of a same encoding network and different decoding networks, under different Configs provided in the embodiments of the present disclosure.

FIG. 11 is a schematic diagram of a scenario of different encoding networks and a same decoding network, under different Configs provided in the embodiments of the present disclosure.

FIG. 12 is a schematic diagram of a hybrid iterative training under a scenario of different encoding networks and a same decoding network, under different Configs provided in the embodiments of the present disclosure.

FIG. 13 is a schematic diagram of a hybrid iterative training under a scenario of different Configs and different Payloads provided in the embodiments of the present disclosure.

FIG. 14 is a schematic diagram of a scenario of a same encoding network and different decoding networks, under different Configs and different Payloads provided in the embodiments of the present disclosure.

FIG. 15 is a schematic diagram of a hybrid iterative training under a scenario of a same encoding network and different decoding networks, under different Configs and different Payloads provided in the embodiments of the present disclosure.

FIG. 16 is a schematic diagram of a scenario of different encoding networks and a same decoding network, under different Configs and different Payloads provided in the embodiments of the present disclosure.

FIG. 17 is a schematic diagram of a hybrid iterative training under a scenario of different encoding networks and a same decoding network under, different Configs and different Payloads provided in the embodiments of the present disclosure.

FIG. 18 is a schematic block diagram of a transmitting-side device provided according to the embodiments of the present disclosure.

FIG. 19 is a schematic block diagram of a receiving-side device provided according to the embodiments of the present disclosure.

FIG. 20 is a schematic block diagram of a communication device provided according to the embodiments of the present disclosure.

FIG. 21 is a schematic block diagram of an apparatus provided according to the embodiments of the present disclosure.

FIG. 22 is a schematic block diagram of a communication system provided according to the embodiments of the present disclosure.

## DETAILED DESCRIPTION

Technical solutions of the embodiments of the present disclosure will be described below in conjunction with the accompanying drawings in the embodiments of the present disclosure. It is apparent that the described embodiments are merely part but not all of embodiments of the present disclosure. With respect to the embodiments of the present disclosure, all other embodiments obtained by those skilled in the art without creative effort fall within the protection scope of the present disclosure.

The technical solutions of the embodiments of the present disclosure may be applied to various communication systems, such as, a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial communication network (Non-Terrestrial Networks, NTN) system, a universal mobile telecommunication system (UMTS), wireless local area networks (WLAN), internet of things (IoT), wireless fidelity (WiFi), a fifth-generation communication (5th-Generation, 5G) system, a sixth-generation communication (6th-Generation, 6G) system or other communication systems.

Generally speaking, traditional communication systems support a limited number of connections which are easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, sidelink (SL) communication, vehicle to everything (V2X) communication or the like. The embodiments of the present disclosure may also be applied to these communication systems.

In some embodiments, a communication system in the embodiments of the present disclosure may be applied to a carrier aggregation (CA) scenario, may also be applied to a dual connectivity (DC) scenario, and may also be applied to a standalone (SA) network deployment scenario, or applied to a non-standalone (NSA) network deployment scenario.

In some embodiments, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

In some embodiments, the communication system in the embodiments of the present disclosure may be applied to a frequency band of FR1 (corresponding to a frequency band range of 410 MHz to 7.125 GHz), may also be applied to a frequency band of FR2 (corresponding to a frequency band range of 24.25 GHz to 52.6 GHz), and may also be applied to new frequency bands, such as, high frequency bands corresponding to a frequency band range of 52.6 GHz to 71 GHz or a frequency band range of 71 GHz to 114.25 GHz.

In the embodiments of the present disclosure, each embodiment will be described in conjunction with a network device and a terminal device, where the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, STA) device in the WLAN, which may be a cellular phone, a cordless phone, a session initiation protocol (SIP) phone, a wireless local loop (WLL) station, or a personal digital assistant (PDA) device, a handheld device with wireless communication functions, a computing device or other processing devices connected to a wireless modem, an in-vehicle device, a wearable device, a terminal device in a next generation communication system (e.g., an NR network), a terminal device in a future evolved public land mobile network (PLMN) network, or the like.

In the embodiments of the present disclosure, the terminal device may be deployed on land, which includes indoor or outdoor, handheld, wearable, or in-vehicle; the terminal device may also be deployed on water (e.g., on a steamship); and the terminal device may also be deployed in air (e.g., on an airplane, on a balloon, or on a satellite).

In the embodiments of the present disclosure, the terminal device may be a mobile phone, a pad, a computer with a wireless transceiving function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, an in-vehicle communication device, a wireless communication chip/application specific integrated circuit (ASIC)/a system on chip (SoC), or the like.

As an example but not a limitation, in the embodiments of the present disclosure, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present disclosure, the network device may be a device used for communicating with a mobile device. The network device may be an access point (AP) in the WLAN, a base station (Base Transceiver Station, BTS) in the GSM or CDMA, may also be a base station (NodeB, NB) in the WCDMA, or may also be an evolutional base station (Evolutional Node B, eNB or eNodeB) in the LTE, a relay station or an access point, a network device or base station (gNB) or a transmission reception point (TRP) in an in-vehicle device, a wearable device, a network device in an NR network, a network device in the future evolved PLMN network, a network device in the NTN network, or the like.

As an example but not a limitation, in the embodiments of the present disclosure, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. In some embodiments, the network device may also be a base station provided on land, water, and other places.

In the embodiments of the present disclosure, the network device may provide services for a cell, and the terminal device communicates with the network device through transmission resources (such as frequency domain resources, or frequency spectrum resources) used by the cell. The cell may be a cell corresponding to the network device (such as the base station). The cell may belong to a macro base station or a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

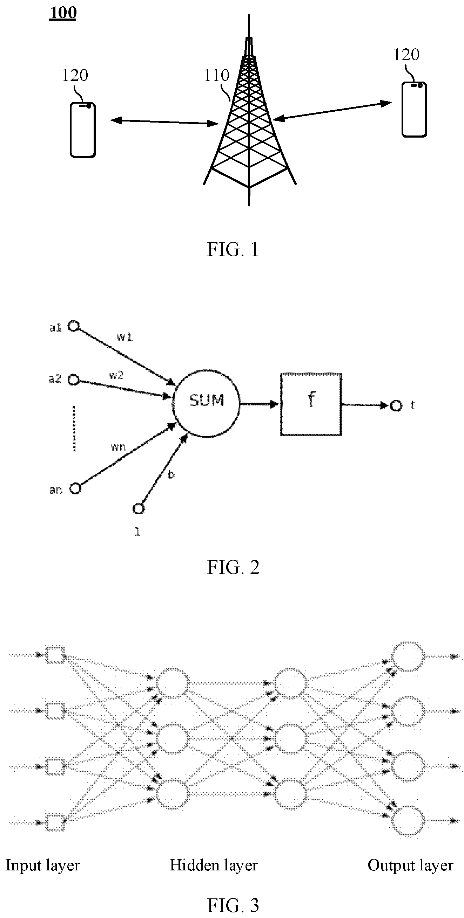

Exemplarily, a communication system 100 applied by the embodiments of the present disclosure is illustrated in FIG. 1. The communication system 100 may include a network device 110, and the network device 110 may be a device used to communicate with a terminal device 120 (or referred to as a communication terminal or terminal). The network device 110 may provide communication coverage for a specific geographic area and communicate with terminal devices located within the coverage area.

FIG. 1 exemplarily illustrates one network device and two terminal devices. In some embodiments, the communication system 100 may include multiple network devices, and coverage range of each network device may be provided therein with other numbers of terminal devices, which is not limited in the embodiments of the present disclosure.

In some embodiments, the communication system 100 may further include other network entities such as a network controller, a mobile management entity, which are not limited in the embodiments of the present disclosure.

It should be understood that a device in a network/system having a communication function in the embodiments of the present disclosure may be referred to as a communication device. Taking the communication system 100 illustrated in FIG. 1 as an example, the communication device may include the network device 110 and the terminal device 120 with the communication function, and the network device 110 and the terminal device 120 may be the specific devices as described above, which will not be repeated here. The communication device may further include other devices in the communication system 100, such as a network controller, a mobility management entity, and other network entities, which are not limited in the embodiments of the present disclosure.

It should be understood that, the terms "system" and "network" are often used interchangeably herein. The term "and/or" herein is only an association relationship to describe associated objects, meaning that there may be three relationships between associated objects, for example, "A and/or B" may represent: A exists alone, both A and B exist, and B exists alone. In addition, a character "/" herein generally means that related objects before and after this character are in an "or" relationship.

It should be understood that, the present disclosure herein relates to a transmitting-side device and a receiving-side device. The transmitting-side device may be a terminal device, such as, a mobile phone, a machine facility, a customer premise equipment (CPE), an industrial equipment, or a vehicle. The receiving-side device may be a peer communication device of the transmitting-side device, such as a network device, a mobile phone, an industrial equipment, or a vehicle. In the embodiments of the present disclosure, the transmitting-side device may be a terminal device, and the receiving-side device may be a network device (i.e., uplink communication or downlink communication); or the transmitting-side device may be a first terminal, and the receiving-side device may be a second terminal (i.e., sidelink communication).

Terms used in the section of detailed description are used only for explanation of specific embodiments of the present disclosure and are not intended to limit the present disclosure. The terms "first", "second", "third", "fourth" or the like in the specification and claims of the present disclosure and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present disclosure may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present disclosure, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present disclosure, "predefined" or "preconfigured" may be achieved by pre-storing corresponding codes, forms or other means used for indicating relevant information in devices (e.g., including a terminal device and network device), and the present disclosure is not limited to the specific implementation thereof. For example, predefined may refer to what is defined in a protocol.

In the embodiments of the present disclosure, the "protocol" may refer to a standard protocol in the field of communication, for example, may be evolution of an existing LTE protocol, NR protocol, Wi-Fi protocol, or protocols related to other communication systems which are related with them, and types of protocol are not limited in the present disclosure.

To facilitate understanding of the technical solutions of the embodiments of the present disclosure, the technical solutions of the present disclosure are described in detail below through specific embodiments. The following related technologies, as optional solutions, may be arbitrarily combined with the technical solutions of the embodiments of the present disclosure, and those combined solutions all belong to the protection scope of the embodiments of the present disclosure. The embodiments of the present disclosure include at least part of following contents.

In order to facilitate a better understanding of the embodiments of the present disclosure, neural networks and machine learning (ML) related to the present disclosure are described.

A neural network is an operational model consisting of multiple neuron nodes connected to each other, where the connection between nodes represents a weighted value from an input signal to an output signal, referred to as a weight; and each node performs weighted summation (SUM) on different input signals and outputs the sum through a specific activation function (f). An example of a neuron structure is illustrated in FIG. 2. A simple neural network is illustrated in FIG. 3, which includes an input layer, hidden layer(s) and an output layer. Different outputs may be generated through different connection manners of multiple neurons, weights and activation functions, and then a mapping relationship from inputs to outputs is fitted.

Deep learning adopts deep neural networks with multiple hidden layers, which greatly improves the ability of networks to learn features and may fit complex non-linear mappings from the inputs to the outputs, and therefore, the deep learning is widely used in the field of speech and image processing. In addition to the deep neural networks, facing different tasks, the deep learning also adopts common basic structures such as convolutional neural networks (CNN) and recurrent neural networks (RNN).

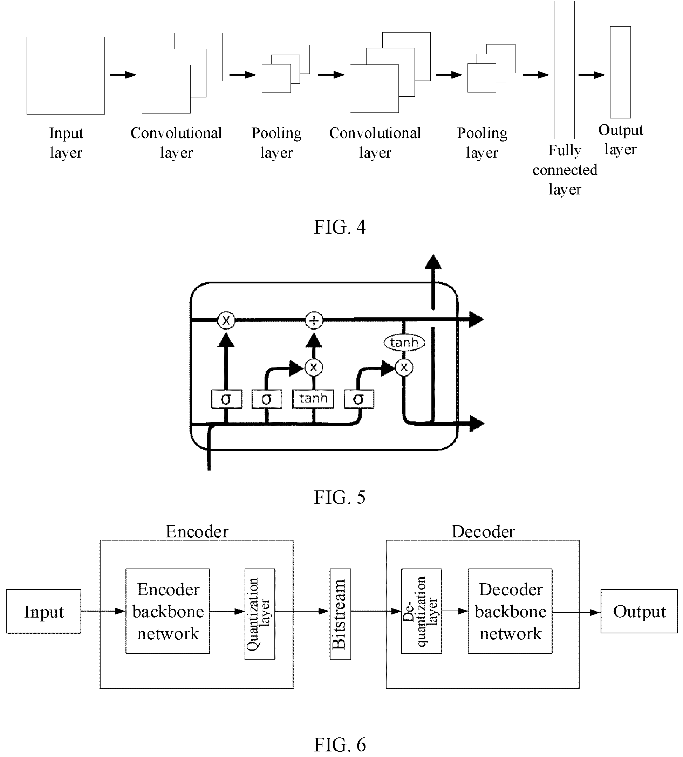

As illustrated in FIG. 4, a basic structure of a convolutional neural network includes an input layer, multiple convolutional layers, multiple pooling layers, a fully connected layer and an output layer. Each neuron of convolution kernels in the convolution layers is locally connected with inputs of the convolution layers, and local maximum or average features of a certain layer are extracted through introducing the pooling layers, which effectively reduces parameters of the network and digs local features, to enable the convolutional neural network to converge quickly and obtain excellent performance.

An RNN is a kind of neural network that performs modeling on sequence data, and has achieved remarkable results in the field of natural language processing, such as, machine translation and speech recognition. Specifically, the network memorizes information of past moments for calculation of the current output, that is, nodes between hidden layers are no longer unconnected but connected, and the inputs of the hidden layers include not only the input layer but also outputs of the hidden layers at a previous moment. RNNs commonly used include structures such as a long short-term memory (LSTM) and a gated recurrent unit (GRU). FIG. 5 illustrates a basic LSTM unit structure, which may include a tanh activation function. Unlike RNN that only considers recent states, the cell state of the LSTM determines which states should be retained and which states should be forgotten, so as to solve the defects of traditional RNNs in long-term memory.

In order to facilitate a better understanding of the embodiments of the present disclosure, a codebook-based CSI feedback scheme in the NR system related to the present disclosure is described.

In a current NR system, for the CSI feedback scheme, a codebook-based feature vector feedback is usually adopted to enable a base station to obtain downlink CSI. Specifically, the base station transmits a downlink channel state information reference signal (CSI-RS) to a terminal, the terminal estimates CSI of a downlink channel using the CSI-RS and performs eigenvalue decomposition on the estimated CSI of the downlink channel, to obtain a feature vector corresponding to the downlink channel. Furthermore, the NR system provides two codebook design schemes: Type 1 and Type 2, in which Type 1 codebook is used for CSI feedback with conventional accuracy and mainly used for transmission in single user multiple input multiple output (SU-MIMO) scenarios, and Type 2 codebook is mainly used for improving transmission performance of multi-user multiple input multiple output (MU-MIMO). The two-level codebook feedback of $W=W_1W_2$ is adopted in both Type 1 and Type 2 codebooks, where $W_1$ describes the wideband and long-term properties of the channel and determines a group of beams, including L Discrete Fourier Transform (DFT) beams; and $W_2$ describes the sub-band and short-term properties of the channel. In particular, for Type 1 codebook, the function of $W_2$ is to select a beam from the L DFT beams; and for Type 2 codebook, the function of $W_2$ is to perform linear merge on the L DFT beams in $W_1$ and feed back in the form of amplitude and phase. Generally, Type 2 codebook utilizes more feedback bits to obtain the CSI feedback performance with higher accuracy.

In order to facilitate a better understanding of the embodiments of the present disclosure, a artificial intelligence (AI)-based CSI feedback scheme related to the present disclosure is described.

In view of the great success of AI technologies, especially the deep learning in aspects of computer vision, natural language processing or the like, the field of communications is begining to attempt to utilize the deep learning, so as to solve technical problems that are difficult to solve by traditional communication methods, such as the deep learning. The neural network architecture commonly used in the deep learning is non-linear and data-driven, which may perform feature extraction on actual channel matrix data, and restore channel matrix information, which is compressed and fed back at the terminal side, at the base station side as much as possible. In this way, the possibility of reducing the CSI feedback payload at the terminal side is provided while ensuring that the channel information is restored. Deep learning-based CSI feedback regards the channel information as an image to be compressed, uses a deep learning autoencoder to perform compression and feedback on the channel information, and reconstructs the compressed channel image at the transmitting-side, which may retain the channel information to a greater extent.

Using an AI-based CSI autoencoder method, the entire feedback system is divided into encoder and decoder parts, which are deployed at a terminal transmitting-side and a base station receiving-side, respectively. After the terminal obtains channel information through channel estimation, the terminal compresses and encodes channel information matrix through a neural network of the encoder, and feeds back compressed bitstream to the base station through an air interface feedback link. The base station recovers the channel information based on the feedback bitstream through the decoder, to obtain complete feedback channel information. A backbone network of the encoder and decoder illustrated in FIG. 6 may adopt a deep neural network (DNN) composed of multi-layer fully connected layers, or adopt a CNN composed of multi-layer convolutional layers, or adopt an RNN with structures such as LSTM and GRU, or adopt various neural network architectures such as residual and Self-attention mechanism, to improve the performance of the encoder and decoder.

The above CSI input and CSI output may be full channel information or feature vector information obtained based on the full channel information. Therefore, the current deep learning-based channel information feedback methods are mainly divided into a full channel information feedback method and a feature vector feedback method. Although the full channel information feedback method may realize the compression and feedback of the full channel information, the feedback bitstream payload is relatively high; in addition, the full channel information feedback method is not supported in the current NR system. However, the feature vector-based feedback method is the feedback architecture supported by the current NR system, and the AI-based feature vector feedback method may achieve higher CSI feedback accuracy with the same feedback bit payload, or significantly reduce the feedback bit payload while achieving the same CSI feedback accuracy.

In order to facilitate a better understanding of the embodiments of the present disclosure, the problems solved by the present disclosure are described.

1. Disadvantages of codebook-based CSI feedback in NR

At present, CSI feedback in the 5G NR standards adopts codebook-based feedback in the forms of Type 1 and Type 2. The codebook-based CSI feedback scheme has good generalization capability for different users and various channel scenarios, and may adapt to different numbers of transmit antenna ports, different numbers of sub-bands and different feedback payloads for flexible configuration. However, since the codebook is predefined, correlation between different antenna ports and sub-bands is not effectively utilized, so the feedback payload is relatively large and the feedback performance is relatively poor.

2. Disadvantages of AI-based CSI feedback

The AI-based CSI feedback scheme may extract correlation of feature vectors in time and frequency domains, and thus, better feedback performance with lower feedback payload is achieved. However, the encoder and decoder adopted in this scheme both adopt the neural network architecture, and it is necessary to perform training on the large-scale dataset to obtain the the neural network architecture. Therefore, during the deployment process, the number of antenna ports and the the number of sub-bands actually configured is necessart to be consistent with the dataset adopted in training, so this scheme is very inflexible.

For example, when the configuration for constructing the dataset has 32 transmitting antenna ports and 12 sub-bands, the size of each sample in the dataset is 32*12*2=768 (here, 2 represents the real and imaginary parts are split). The input and output of the CSI encoder and decoder models trained on the dataset are both the vector or matrix with the length of 768, however, the CSI encoder and decoder models cannot effectively adapt to the feature vector input with the configuration of other numbers of transmit antenna ports and sub-bands. For example, in the actual deployment, the configuration of 16 antenna ports and 12 sub-bands, and the length of the input vector is 384 are adopted, the spatial domain and frequency domain features included in such configuration are inconsistent with those in the training set, and thus, the model obtained on the above training set is not applicable under such configuration.

In addition, for the feedback bit payload, for example, for the channel feature vector with the configuration of 32 transmitting antenna ports and 12 sub-bands, the feedback payload configuration may have different configuration requirements from high to low (for example, from about 300 bits to about 60 bits). For the different feedback payloads, the CSI encoder and decoder models will also have different model parameters.

In the actual deployment, different configurations may be generated for different UEs. If different CSI autoencoder models are provided for each antenna port and sub-band configuration and each feedback payload, the model storage payload required at the network side and the UE side is too high. In addition, for the same UE, when the configuration switching occurs, it may be necessary for the UE to download the encoder model via the network side, and the model download payload caused by the process is also too large.

Therefore, during the actual deployment, how to solve the scalability problem of the AI-based CSI autoencoder under different configurations is of significance for the research on the AI-based CSI feedback.

Based on the above problems, a method for channel information feedback is proposed in the present disclosure. The transmitting-side device may feed back the channel information through the encoding network, and the receiving-side device may obtain the channel information fed back by the transmitting-side device through the decoding network. The channel information (such as, CSI) feedback may adapt to the different channel information input and output dimensions and different feedback payload configurations, which improves the feedback performance of the channel information (such as, CSI), and also improves the flexibility and scalability of the encoding network and the decoding network in the actual deployment.

The technical solutions of the present disclosure is described in detail below through the specific embodiments.

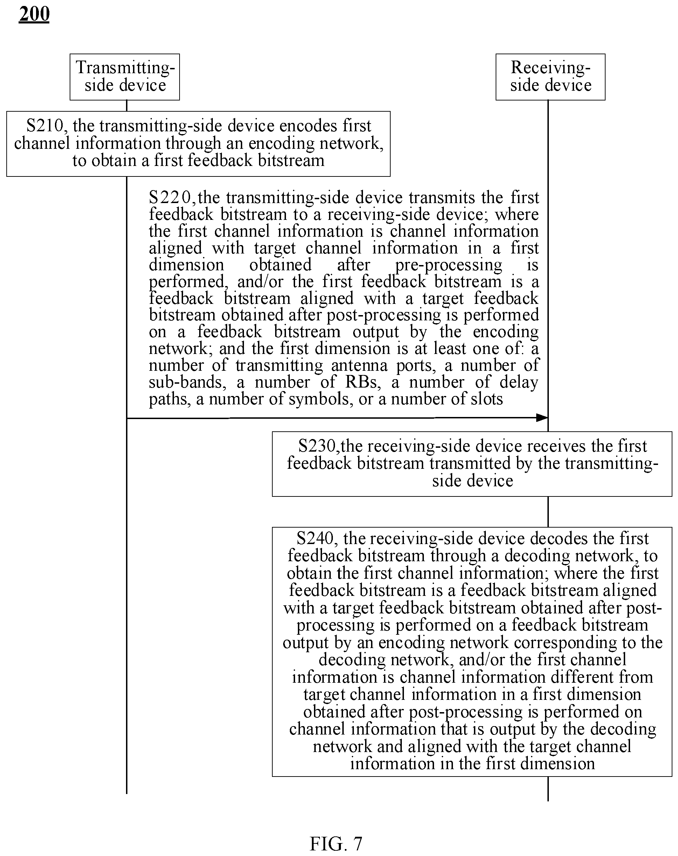

FIG. 7 is a schematic flowchart of a method 200 for channel information feedback according to the embodiments of the present disclosure. As illustrated in FIG. 7, the method 200 for channel information feedback may include at least part of following contents.

In S210, a transmitting-side device encodes first channel information through an encoding network, to obtain a first feedback bitstream.

In S220, the transmitting-side device transmits the first feedback bitstream to a receiving-side device; where the first channel information is channel information aligned with target channel information in a first dimension obtained after pre-processing is performed, and/or the first feedback bitstream is a feedback bitstream aligned with a target feedback bitstream obtained after post-processing is performed on a feedback bitstream output by the encoding network; and the first dimension is at least one of: a number of transmitting antenna ports, a number of sub-bands, a number of resource blocks (RBs), a number of delay paths, a number of symbols, or a number of slots.

In S230, the receiving-side device receives the first feedback bitstream transmitted by the transmitting-side device.

In S240, the receiving-side device decodes the first feedback bitstream through a decoding network, to obtain the first channel information; where the first feedback bitstream is a feedback bitstream aligned with a target feedback bitstream obtained after post-processing is performed on a feedback bitstream output by an encoding network corresponding to the decoding network, and/or the first channel information is channel information different from target channel information in a first dimension obtained after post-processing is performed on channel information that is output by the decoding network and aligned with the target channel information in the first dimension.

In the embodiments of the present disclosure, the transmitting-side device may feed back the channel information through the encoding network; where the encoding network supports that the channel information aligned in the first dimensions obtained after pre-processing is performed on the channel information in multiple kinds of first dimensions is taken as the input, and/or the encoding network supports that the feedback bitstreams with multiple kinds of feedback payloads are taken as the outputs; and the transmitting-side device transmits the feedback bitstreams aligned with the target feedback bitstream obtained after post-processing is performed on the feedback bitstreams output by the encoding network to the receiving-side device.

In the embodiments of the present disclosure, the receiving-side device obtains the channel information fed back by the transmitting-side device through the decoding network; where the decoding network supports that the feedback bitstreams aligned with the target feedback bitstream obtained after pre-processing is performed on the feedback bitstreams with multiple kinds of feedback payloads are taken as the inputs, and/or after post-processing is performed, the outputs of the decoding network correspond to the channel information in multiple kinds of first dimensions.

In some embodiments, in a case where the first channel information is the channel information aligned with the target channel information in the first dimension obtained after pre-processing is performed, for different physical resource configurations associated with channel information feedback, the feedback bitstreams output by the encoding network have the same length.

In some embodiments, in a case where the first feedback bitstream is the feedback bitstream aligned with the target feedback bitstream obtained after post-processing is performed on the feedback bitstream output by the encoding network, for different channel information feedback payload configurations, without pre-processing, the channel information input to the encoding network is the same in the first dimension.

In some embodiments, the channel information mentioned in the embodiments of the present disclosure may be CSI, definitely, may also be other channel information, and the present application is not limited thereto.

In the embodiments of the present disclosure, the encoding network may support that the channel information aligned with the target channel information in the first dimensions obtained after pre-processing is performed on the channel information in multiple kinds of first dimensions is taken as the input, and/or the encoding network supports that the feedback bitstreams with multiple kinds of feedback payloads are taken as the outputs; and the transmitting-side device transmits the feedback bitstreams aligned with the target feedback bitstream obtained after post-processing is performed on the feedback bitstreams output by the encoding network to the receiving-side device. That is, through the embodiments of the present disclosure, the channel information (such as, CSI) feedback may adapt to the different channel information input and output dimensions of and different feedback payload configurations, which improves the feedback performance of the channel information (such as, CSI), and also improves the flexibility and scalability of the encoding network and the decoding network in the actual deployment.

The encoding network mentioned in the embodiments of the present disclosure is an AI/ML neural network, which may also be referred to as an encoder or an autoencoder, or a similar name, and the embodiment of the present application is not limited thereto. The decoding network mentioned in the embodiments of the present disclosure is an AI/ML neural network corresponding to the encoding network, which may also be referred to as a decoder or a autodecoder, or a similar name, and the embodiment of the present application is not limited thereto.

In some embodiments, the receiving-side device is a terminal device and the transmitting-side device is a network device; or the receiving-side device is a network device and the transmitting-side device is a terminal device.

In yet some embodiments, the receiving-side device is a terminal device and the transmitting-side device is another terminal device. For example, the embodiments of the present disclosure are applied to sidelink (SL) communication.

In yet some embodiments, the transmitting-side device is a network device, and the receiving-side device is another network device. For example, the embodiments of the present disclosure are applied to backhaul link communication.

In some embodiments, in the frequency domain, the first dimension may be not only the number of resource blocks (RBs), but also the number of subcarriers, the number of band width parts (BWP) or the like, or other frequency domain resource granularity.

In some embodiments, in the time domain, the first dimension may be not only the number of delay paths, the number of symbols, the number of slots or the like, but also the number of micro-slots or mini-slots, the number of sub-frames or the like, or other time domain resource granularity.

The transmitting antenna port mentioned in the embodiments of the present disclosure may be the CSI-RS antenna port or other antenna ports, and the embodiment of the present application is not limited thereto.

It should be noted that the first dimension may also be other resource granularities, and the embodiment of the present application is not limited thereto.

In some embodiments, in a case where the encoding network supports the channel information in the multiple kinds of first dimensions as the input, the decoding network supports the channel information in the multiple kinds of first dimensions as the output. Specifically, the encoding network corresponds to the decoding network, that is, the kind of the first dimension supported by the encoding network is the same as that of the first dimension supported by the decoding network.

In some embodiments, in a case where the encoding network supports that the feedback bitstreams with the multiple kinds of feedback payloads are taken as the outputs, the decoding network supports that the feedback bitstreams with the multiple kinds of feedback payloads are taken as the inputs. Specifically, the encoding network corresponds to the decoding network, that is, the kind of the feedback payload supported by the encoding network is the same as that of the feedback payload supported by the decoding network.

In some embodiments, in a case where the encoding network supports the channel information in the multiple kinds of first dimensions as the input and the encoding network supports that the feedback bitstreams with the multiple kinds of feedback payloads are taken as the outputs, the decoding network supports that the feedback bitstreams with the multiple kinds of feedback payloads are taken as the inputs and the decoding network supports the channel information in the multiple kinds of first dimensions as the output.

In some embodiments, in a case where the transmitting-side device is the terminal device and the receiving-side device is the network device, the feedback bitstream output by the encoding network may be carried by at least one of:
Physical Uplink Control Channel (PUCCH) or Physical Uplink Shared Channel (PUSCH).

In some embodiments, in a case where the transmitting-side device is the network device and the receiving-side device is the terminal device, the feedback bitstream output by the encoding network may be carried by at least one of:
Physical Downlink Control Channel (PDCCH) or physical downlink shared channel (PDSCH).

In some embodiments, in a case where the transmitting-side device is the terminal device and the receiving-side device is another terminal device, the feedback bitstream output by the encoding network may be carried by at least one of:
Physical Sidelink Control Channel (PSCCH), Physical Sidelink Shared Channel (PSSCH) or Physical Sidelink Feedback Channel (PSFCH).

In some embodiments, the target channel information is maximum channel information in the first dimension among channel information corresponding to each of M physical resource configurations associated with channel information feedback, where different physical resource configurations among the M physical resource configurations are different in the first dimension, M is a positive integer, and M is larger than or equal to 2 (i.e., $M \geq 2$). Optionally, the M physical resource configurations may be pre-configured.

In some embodiments, the target channel information is specific channel information among the channel information corresponding to each of the M physical resource configurations associated with the channel information feedback, which is not limited in the embodiments of the present disclosure.

In some embodiments, the target channel information is configured by the network device, or the target channel information is agreed upon by a protocol.

In some embodiments, the target feedback bitstream is a maximum or minimum feedback bitstream among feedback bitstreams corresponding to each of N channel information feedback payload configurations; where N is a positive integer, and N is larger than or equal to 2 (i.e., $N \geq 2$). Optionally, the N channel information feedback payload configurations may be pre-configured.

In some embodiments, the target feedback bitstream is configured by the network device, or the target feedback bitstream is agreed upon by a protocol.

In some embodiments, the channel information input to the encoding network may be a CSI matrix or a CSI vector. That is, the first channel information may be a CSI matrix or a CSI vector.

For example, the channel information input to the encoding network may be CSI matrices or CSI vectors corresponding to various numbers of transmitting antenna ports, or the channel information input to the encoding network may be CSI matrices or CSI vectors corresponding to various numbers of sub-bands, or the channel information input to the encoding network may be CSI matrices or CSI vectors corresponding to various numbers of RBs, or the channel information input to the encoding network may be CSI matrices or CSI vectors corresponding to various numbers of delay paths, or the channel information input to the encoding network may be CSI matrices or CSI vectors corresponding to various numbers of symbols, or the channel information input to the encoding network may be CSI matrices or CSI vectors corresponding to various numbers of slots.

For another example, the channel information input to the encoding network may be CSI matrices or CSI vectors corresponding to various numbers of transmitting antenna ports and various numbers of sub-bands, or the channel information input to the encoding network may be CSI matrices or CSI vectors corresponding to various numbers of transmitting antenna ports and multiple numbers of RBs, or the channel information input to the encoding network may be CSI matrices or CSI vectors corresponding to various numbers of transmitting antenna ports and various numbers of delay paths, or the channel information input to the encoding network may be CSI matrices or CSI vectors corresponding to various numbers of transmitting antenna ports and various numbers of symbols, or the channel information input to the encoding network may be CSI matrices or CSI vectors corresponding to various numbers of transmitting antenna ports and various numbers of slots.

For another example, the channel information input to the encoding network may be CSI matrices or CSI vectors corresponding to various numbers of sub-bands and various numbers of RBs, or the channel information input to the encoding network may be CSI matrices or CSI vectors corresponding to various numbers of sub-bands and various numbers of delay paths, or the channel information input to the encoding network may be CSI matrices or CSI vectors corresponding to various numbers of sub-bands and various numbers of symbols, or the channel information input to the encoding network may be CSI matrices or CSI vectors corresponding to various numbers of sub-bands and various numbers of slots.

For another example, the channel information input to the encoding network may be CSI matrices or CSI vectors corresponding to various numbers of RBs and various numbers of delay paths, or the channel information input to the encoding network may be CSI matrices or CSI vectors corresponding to various numbers of RBs and various numbers of symbol numbers, or the channel information input to the encoding network may be CSI matrices or CSI vectors corresponding to various numbers of RBs and various numbers of slots.

For another example, the channel information input to the encoding network may be CSI matrices or CSI vectors corresponding to various numbers of delay paths and various numbers of symbols, or the channel information input to the encoding network may be CSI matrices or CSI vectors corresponding to various numbers of delay paths and various numbers of slots.

For another example, the channel information input to the encoding network may be CSI matrices or CSI vectors corresponding to various numbers of transmitting antenna ports, various numbers of sub-bands and various numbers of RBs, or the channel information input to the encoding network may be CSI matrices or CSI vectors corresponding to various numbers of transmitting antenna ports, various numbers of sub-bands and various numbers of delay paths, or the channel information input to the encoding network may be CSI matrices or CSI vectors corresponding to various numbers of transmitting antenna ports, various numbers of sub-bands and various numbers of slots, or the channel information input to the encoding network may be CSI matrices or CSI vectors corresponding to various numbers of transmitting antenna ports, various numbers of sub-bands and various numbers of symbols, or the channel information input to the encoding network may be CSI matrices or CSI vectors corresponding to various numbers of sub-bands, various numbers of RBs and various numbers of delay paths, or the channel information input to the encoding network may be CSI matrices or CSI vectors corresponding to various numbers of sub-bands, various numbers of RBs and various numbers of slots, or the channel information input to the encoding network may be CSI matrices or CSI vectors corresponding to various numbers of sub-bands, various numbers of RBs and various numbers of symbols.

For another example, the channel information input to the encoding network may be CSI matrices or CSI vectors corresponding to various numbers of transmitting antenna ports, various numbers of sub-bands, various numbers of RBs and various numbers of delay paths; or the channel information input to the encoding network may be CSI matrices or CSI vectors corresponding to various numbers of transmitting antenna ports, various numbers of sub-bands, various numbers of RBs and various numbers of symbols; or the channel information input to the encoding network may be CSI matrices or CSI vectors corresponding to various numbers of transmitting antenna ports, various numbers of sub-bands, various numbers of RBs and various numbers of slots.

In the embodiments of the present disclosure, the different physical resource configurations associated with channel information feedback affect the CSI matrix or CSI vector input to the encoding network and the CSI matrix or CSI vector output by the decoding network.

In the embodiment of the present disclosure, the channel information feedback payload configurations affect the feedback bitstream output by the encoding network and the feedback bitstream input by the decoding network.

In some embodiments, under the different physical resource configurations associated with channel information feedback and/or under the different channel information feedback payload configurations, encoding networks are same or model weight parameters of the encoding networks are same; and
the different physical resource configurations associated with channel information feedback are different in the first dimension.

In some embodiments, under the different physical resource configurations associated with channel information feedback and/or under the different channel information feedback payload configurations, decoding networks are same or model weight parameters of the decoding networks are same; and; and
the different physical resource configurations associated with channel information feedback are different in the first dimension.

In some embodiments, under the different physical resource configurations associated with channel information feedback and/or under the different channel information feedback payload configurations, the encoding networks and the decoding networks are the same or model weight parameters of the encoding networks are the same as those of the decoding networks.

For example, under different numbers of antenna ports, different numbers of sub-bands and different feedback payload configurations, the encoding networks and the decoding networks are the same.

In some embodiments, under the different physical resource configurations associated with channel information feedback and/or under the different channel information feedback payload configurations, the encoding networks are the same or the model weight parameters of the encoding networks are the same, and the decoding networks are different or the model weight parameters of the decoding networks are different.

For example, under different numbers of antenna ports, different numbers of sub-bands and different feedback payload configurations, the encoding networks are the same but the decoding networks are different.

In some embodiments, under the different physical resource configurations associated with channel information feedback and/or under the different channel information feedback payload configurations, the encoding networks are different or the model weight parameters of the encoding networks are different, and the decoding networks are the same or the model weight parameters of the decoding networks are the same.

For example, under different numbers of antenna ports, different numbers of sub-bands and different feedback payload configurations, the encoding networks are different but the decoding networks are the same.

In some embodiments, the encoding network and the decoding network may be obtained by performing training through the transmitting-side device, or the encoding network and the decoding network may be obtained by performing training through the receiving-side device, or the encoding network and the decoding network may be obtained by performing training through a specific server or network element, or the encoding network may be obtained by performing training through the transmitting-side device and the decoding network may be obtained by performing training through the receiving-side device.

In some embodiments, for M physical resource configurations associated with channel information feedback, the transmitting-side device performs pre-processing on channel information corresponding to each of the M physical resource configurations to align the channel information corresponding to each of the M physical resource configurations with the target channel information in the first dimension, to obtain an input of the encoding network corresponding to each of the M physical resource configurations, where M is a positive integer, and M is larger than or equal to 2 (i.e., M≥2). In this case, the first channel information may be the channel information aligned with the target channel information in the first dimension obtained after pre-processing is performed.

In some embodiments, for the channel information corresponding to each of the M physical resource configurations, the channel information is aligned with the target channel information by padding first placeholder information in the first dimension during pre-processing, and the channel information is channel information different from the target channel information in the first dimension obtained by deleting the first placeholder information in the first dimension during post-processing. Optionally, the first placeholder information is 0. Definitely, the first placeholder information may also be other information, which is not limited in the embodiments of the present disclosure.

Specifically, for example, for the channel information, the transmitting-side device aligns the channel information with the target channel information by continuously padding 0 backward in the first dimension, or the transmitting-side device aligns the channel information with the target channel information by continuously padding 0 forward in the first dimension, or the transmitting-side device aligns the channel information with the target channel information by interpolating 0 in the first dimension.

In some embodiments, for M physical resource configurations associated with channel information feedback, the receiving-side device performes post-processing on channel information output by the decoding network, aligned with the target channel information in the first dimension and corresponding to each of the M physical resource configurations, to delete first placeholder information in the channel information output by the decoding network and corresponding to each of the M physical resource configurations, so as to obtain channel information different from the target channel information in the first dimension and corresponding to each of the M physical resource configurations. An input of the encoding network corresponding to each of the M physical resource configurations is obtained by padding the first placeholder information to the channel information corresponding to each of the M physical resource configurations in the first dimension, M is a positive integer and M is larger than or equal to 2 (i.e., M≥2).

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as Config 1 and Config 2, respectively, and Config 1 and Config 2 are different in the first dimension. In addition, two different kinds of feedback payload configurations are considered and denoted as Payload 1 and Payload 2, respectively, in which the length of Payload 1 feedback bitstream is L1, the length of Payload 2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for different Configs and the same Payload, the method in which pre-processing is performed on the inputs of the encoding network and post-processing is performed on the outputs of the decoding network is adopted: for the inputs of the encoding network, Config 1 and Config 2 are padded and aligned in the first dimension, that is, if Config 1 is longer than Config 2 in the first dimension (for example, Config 1 is configured with 32 transmitting antenna ports and Config 2 is configured with 16 transmitting antenna ports), the input corresponding to Config 2 is padded with 0 in the first dimension to align with Config 1. For the outputs of the decoding network, corresponding post-processing is performed, that is, if Config 2 performs 0-padding operation in the first dimension, the decoding network performs cutting on the corresponding position to retain the part that is not padded with 0 only. Based on the above pre-processing and post-processing methods, training may be performed directly on the encoding network and decoding network by mixing the two different kinds of physical resource configurations, to obtain model(s) adapted to Config 1 and Config 2.

In some embodiments, in a case where the first feedback bitstream is the feedback bitstream aligned with the target feedback bitstream obtained after post-processing is performed on the feedback bitstream output by the encoding network (that is, the encoding network supports that the feedback bitstreams with multiple kinds of feedback payloads are taken as the outputs), for N channel information feedback payload configurations, the transmitting-side device may perform training on the encoding network and the decoding network. Specifically, the transmitting-side device constructs N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2). The transmitting-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the transmitting-side device inputs each feedback bitstream aligned with the target feedback bitstream into a corresponding decoding model. The transmitting-side device completes training once on the i-th encoding model and a decoding model corresponding to the i-th encoding model during a j-th training period of model training, and then copies weight parameters of the i-th encoding model and weight parameters of the decoding model corresponding to the i-th encoding model to the (i+k)-th encoding model and a decoding model corresponding to the (i+k)-th encoding model, respectively. The transmitting-side device completes training once on the (i+k)-th encoding model and the decoding model corresponding to the (i+k)-th encoding model based on the copied weight parameters during a (j+1)-th training period of model training, and copies weight parameters of the (i+k)-th encoding model and weight parameters of the decoding model corresponding to the (i+k)-th encoding model to the i-th encoding model and the decoding model corresponding to the i-th encoding model, respectively. Where the i-th encoding model or the (i+k)-th encoding model after S training periods is the encoding network, the decoding model corresponding to the i-th encoding model or the decoding model corresponding to the (i+k)-th encoding model after the S training periods is a decoding network corresponding to the encoding network, i, j, k and S are all positive integers, and i plus k is less than or equal to N (i.e., i+k≤N).

In some embodiments, in a case where the first feedback bitstream is the feedback bitstream aligned with the target feedback bitstream obtained after post-processing is performed on the feedback bitstream output by the encoding network (that is, the encoding network supports that the feedback bitstreams with multiple kinds of feedback payloads are taken as the outputs), for N channel information feedback payload configurations, the receiving-side device may perform training on the encoding network and the decoding network. Specifically, for the N channel information feedback payload configurations, the receiving-side device constructs N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2). The receiving-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the receiving-side device inputs each feedback bitstream aligned with the target feedback bitstream into a corresponding decoding model. The receiving-side device completes training once on the i-th encoding model and a decoding model corresponding to the i-th encoding model during a j-th training period of model training, and then copies weight parameters of the i-th encoding model and weight parameters of the decoding model corresponding to the i-th encoding model to the (i+k)-th encoding model and a decoding model corresponding to the (i+k)-th encoding model, respectively. The receiving-side device completes training once on the (i+k)-th encoding model and the decoding model corresponding to the (i+k)-th encoding model based on the copied weight parameters during a (j+1)-th training period of model training, and copies weight parameters of the (i+k)-th encoding model and weight parameters of the decoding model corresponding to the (i+k)-th encoding model to the i-th encoding model and the decoding model corresponding to the i-th encoding model, respectively. Where the i-th encoding model or the (i+k)-th encoding model after S training periods is the encoding network corresponding to the decoding network, and the decoding model corresponding to the i-th encoding model or the decoding model corresponding to the (i+k)-th encoding model after the S training periods is the decoding network, i, j, k and S are all positive integers, and i plus k is less than or equal to N (i.e., i+k≤N).

In some embodiments, a feedback bitstream is aligned with the target feedback bitstream by padding second placeholder information during post-processing, or a feedback bitstream is aligned with the target feedback bitstream by intercepting part of a bitstream during post-processing, or a feedback bitstream is aligned with the target feedback bitstream by deleting part of a bitstream during post-processing.

In some embodiments, the second placeholder information is 0 or 1.

It should be noted that the i-th encoding model and the decoding model corresponding to the i-th encoding model perform hybrid training iterations with the (i+k)-th encoding model and the decoding model corresponding to the (i+k)-th encoding model, that is, in the present embodiment, the N encoding models perform hybrid training iterations in pairs and the N decoding models perform hybrid training iterations in pairs, or the N encoding models perform serial hybrid training iterations and the N decoding models perform serial hybrid training iterations (for example, the first encoding model and its corresponding decoding model perform hybrid training iterations with the second encoding model and its corresponding decoding model, the second encoding model and its corresponding decoding model perform hybrid training iterations with the third encoding model and its corresponding decoding model, the third encoding model and its corresponding decoding model perform hybrid training iterations with the fourth encoding model and its corresponding decoding model, and so on, definitely, other serial manners may also be adopted, which are not limited in the embodiments of the present disclosure), to ensure that each encoding model and a respective decoding model corresponding to each encoding model are subjected to at least one hybrid training iteration in pairs, thereby ensuring that the trained encoding network and decoding network are adapted to the N channel information feedback payload configurations.

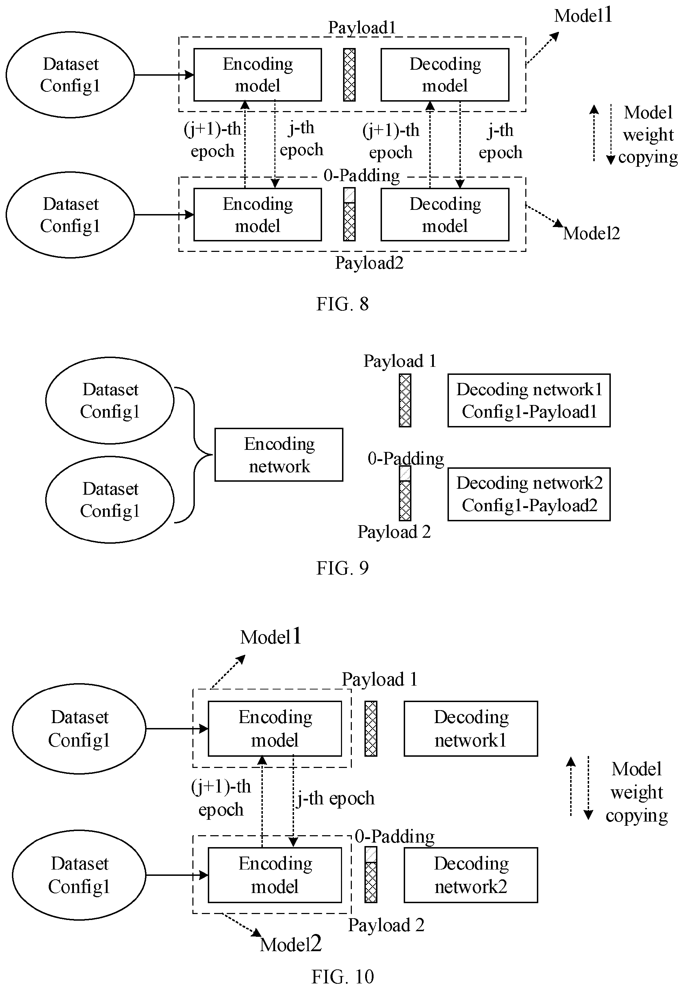

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Config 1) and configuration 2 (Config 2), respectively, and Config 1 and Config 2 are different in the first dimension. In addition, two different kinds of feedback payload configurations are considered and denoted as payload 1 (Payload 1) and payload 1 (Payload 2), respectively, in which the length of Payload 1 feedback bitstream is L1, the length of Payload 2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the same Config and different Payloads, a bitstream interception and hybrid iterative training method is adopted to implement the scalable encoding network and decoding network. Taking Config 1 as an example, Config1 needs to adapt to two kinds of feedback bit payloads, Payload1 and Payload2. A direct operation method is to train the model on (Config1-Payload1). During deployment, if the feedback payload of Payload2 is configured, the bitstream feedback with L2 length is intercepted on the bitstream with L1 length, and the CSI decoder input at the network side corresponding to other non-feedback bits is directly defaulted to 0. However, when directly intercepting in this way, since all CSI input information has been dispersed to the bitstream with L1 length by the encoder, intercepting only bitstream with L2 length will discard a lot of information, and the discarded information cannot be effectively obtained at the CSI decoder side, so that the CSI performance recovered by the CSI decoder is poor. In order to ensure that the intercepted bitstream with L2 length may also carry enough CSI information, the present disclosure proposes a bitstream interception and hybrid iterative training method, as illustrated in FIG. 8. The hybrid training iterative method is as follows: for Payload1 and Payload2, two sets of encoding model+decoding model are constructed and denoted as Model1 (encoding model+decoding model) and Model2 (encoding model+decoding model), respectively, both of which use the same encoding model architecture and decoding model architecture. However, for the model of Payload2, Model2, only first L2 bits are intercepted as valid input when feeding back bits, and the unfed back bits with L1-L2 length are defaulted to 0 when inputting to the CSI decoder. During the j-th training period of training process, firstly, training is completed once on (Config1-Payload1), and meanwhile, the encoding model weights and decoding model weights of Model1 are copied to Model2, respectively. During the (j+1)-th training period of training process, training of Model2 is completed once on (Config1-Payload2) based on the copied weights, and the encoding model weights and decoding model weights of Model2 are copied to Model1, respectively. The above training process is iterated for multiple rounds. The weights of Model1 are consistent with those of Model2, and the weight model is retained to be a configuration to adapt to different payloads. Under the hybrid iterative training method, the trained encoding network and decoding network may be flexibly adapted to the feedback payload configurations with L1 length and L2 length.

In the embodiments of the present disclosure, in a case where the first feedback bitstream is the feedback bitstream aligned with the target feedback bitstream obtained after post-processing is performed on the feedback bitstream output by the encoding network (that is, the encoding network supports that the feedback bitstreams with multiple kinds of feedback payloads are taken as the outputs), the encoding network and the decoding network share the same model weight parameters. Considering that the encoding network and the decoding network may have a certain performance loss in the recovery accuracy of channel information (e.g., CSI) due to the scalability of adapting to multiple channel information feedback payload configurations, a design of the same encoding networks (e.g., using the same model weight parameters) and different decoding networks (e.g., using different model weight parameters) under different channel information feedback payload configurations is considered. Specifically, as illustrated in FIG. 9, still taking two different Payloads as an example, different Payloads share the same encoding network, and the decoding network may adopt different model weight parameters since the decoding network is deployed at the receiving-side device, to further perform re-trainiing for the channel information (e.g., CSI) recovery accuracy under different Payloads.

In some embodiments, under different channel information feedback payload configurations (that is, the encoding network supports that the feedback bitstreams with multiple kinds of feedback payloads are taken as the outputs), the encoding networks are the same (e.g., using the same model weight parameters) and the decoding networks are different (e.g., using different model weight parameters). In this case, on the basic of the encoding network (that is, encoding networks are the same under different channel information feedback payload configurations, e.g., using the same model weight parameters) and the decoding network (that is, decoding networks are the same under different channel information feedback payload configurations, e.g., using the same model weight parameters) obtained by the transmitting-side device based on the hybrid iterative training method illustrated in FIG. 8 above, the transmitting-side device or the receiving-side device re-trains the decoding network corresponding to the encoding network based on the N channel information feedback payload configurations in a case where the encoding network remains unchanged.

Specifically, for example, re-training based on hybrid iteration: on the basic of the encoding network (that is, the encoding networks are the same under different Payloads, e.g., using the same model weight parameters) and decoding network (that is, the decoding networks are the same under different Payloads, e.g., using the same model weight parameters) obtained by using the hybrid iterative training method illustrated in FIG. 8 above, the decoding network may be re-trained on different Payloads by remaining the encoding network part unchanged. It should be noted that different decoding networks only differ in model weight parameters but maintain the same model structure.

In some embodiments, under different channel information feedback payload configurations (that is, the encoding network supports that the feedback bitstreams with multiple kinds of feedback payloads are taken as the outputs), the encoding networks are the same (e.g., using the same model weight parameters) and the decoding networks are different (e.g., using different model weight parameters). In this case, the transmitting-side device may perform training on the encoding network based on the hybrid iteration. Specifically, for N channel information feedback payload configurations, the transmitting-side device constructs N encoding models, respectively, where the N encoding models have a same model architecture, N is a positive integer, and N is larger than or equal to 2 (i.e., $N \geq 2$). The transmitting-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the transmitting-side device inputs each feedback bitstream aligned with the target feedback bitstream into a decoding network. The transmitting-side device completes training once on the i-th encoding model during a j-th training period of model training, and then copies weight parameters of the i-th encoding model to the (i+k)-th encoding model. The transmitting-side device completes training once on the (i+k)-th encoding model based on the copied weight parameters during a (j+1)-th training period of model training, and copies weight parameters of the (i+k)-th encoding model to the i-th encoding model. Where the i-th encoding model or the (i+k)-th encoding model after S training periods is the encoding network, i, j, k, and S are all positive integers, and i plus k is less than or equal to N (i.e., $i+k \leq N$).

It should be noted that the i-th encoding model performs hybrid training iterations with the (i+k)-th encoding model, that is, in the persent embodiment, the N encoding models perform hybrid training iterations in pairs, or the N encoding models perform serial hybrid training iterations (e.g., the first encoding model performs hybrid training iterations with the second encoding model, the second encoding model performs hybrid training iterations with the third encoding model, the third encoding model performs hybrid training iterations with the fourth encoding model, and so on; definitely, other serial manners may also be adopted, which are not limited in the embodiments of the present disclosure), to ensure that each encoding model is subjected to at least one hybrid training iteration in pairs, thereby ensuring that the trained encoding network is adapted to the N channel information feedback payload configurations.

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Configl) and configuration 2 (Config2), respectively, and Config1 and Config2 are different in the first dimension. In addition, two different kinds of feedback payload configurations are considered and denoted as payload 1 (Payload1) and payload 1 (Payload2), respectively, in which the length of Payload1 feedback bitstream is L1, the length of Payload2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the same Config and different Payloads, a bitstream interception and hybrid iterative training method is adopted to implement scalable encoding network. Taking Config1 as an example, Config1 needs to adapt to two kinds of feedback bit payloads, Payload1 and Payload2. Specifically, as illustrated in FIG. 10, the hybrid training iteration method is as follows: for Payload1 and Payload2, two encoding models are constructed and denoted as Model1 (encoding model) and Model2 (encoding model), respectively, both of which use the same encoding model architecture. However, for the model of Payload2, Model2, only first L2 bits are intercepted as valid input when feeding back bits, and the unfed back bits with (L1-L2) length are defaults to 0 when inputting to the decoding network. During the j-th training period of training process, firstly, training is completed on (Config1-Payload1) once, and the encoding model weights of Model1 are copied to Model2. During the (j+1)-th training period of training process, training of Model2 is completed on (Config1-Payload2) once based on the copied weights, and the encoding model weights of Model2 are copied to Model1. The above training process is iterated for multiple rounds. The weights of Model1 are consistent with those of Model2, and the weight model is retained to be a configuration to adapt to different payloads. The receiving-side device may adopt different decoding networks for different payloads, where the model structures of different decoding networks may be different. Under the hybrid iterative training method, the trained encoding network may be flexibly adapted to the feedback payload configurations with L1 length and L2 length.

Specifically, since the encoding network is deployed at the transmitting-side (e.g., the UE side) and does not change with the change of Payload configuration, no additional encoding network model storage and download payload is required. However, the decoding network is deployed at the receiving-side (e.g., the network side), and the adjustment of its model weight and model selection may be directly adjusted by the receiving-side device (e.g., the network device) according to the configuration currently served for the transmitting-side device (UE). This process is transparent to the transmitting-side device (UE) and may be determined by the receiving-side device (e.g., the network device). Under such operation method, the receiving-side device (e.g., the network device) may still indicate Config and Payload to the transmitting-side device (UE), and implement the adaptation of the decoding network locally.

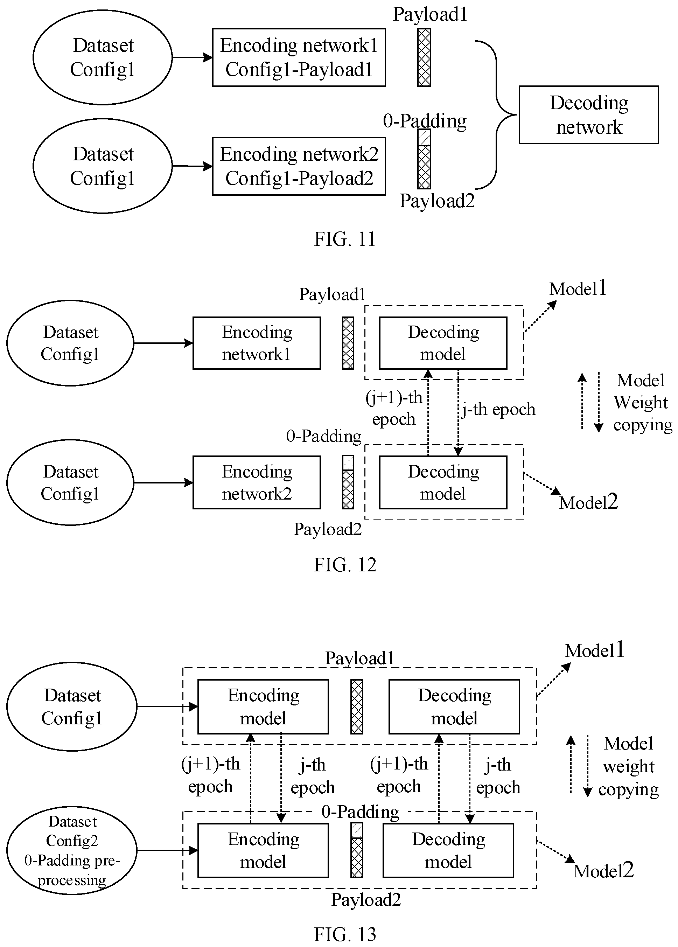

In the embodiments of the present disclosure, in a case where the first feedback bitstream is the feedback bitstream aligned with the target feedback bitstream obtained after post-processing is performed on the feedback bitstream output by the encoding network (that is, the encoding network supports that the feedback bitstreams with multiple kinds of feedback payloads are taken as the outputs), the encoding network and the decoding network share the same model weight parameters. Considering that the encoding network and the decoding network may have a certain performance loss in the recovery accuracy of channel information (e.g., CSI) due to the scalability of adapting to multiple channel information feedback payload configurations, a design of the different encoding networks (e.g., using the different model weight parameters) and the same decoding networks (e.g., using the same model weight parameters) under different channel information feedback payload configurations may be considered. Specifically, as illustrated in FIG. 11, still taking two different Payloads as an example, different Payloads share the same decoding network, and and the encoding network may adopt different model weight parameters since the encoding network is deployed at the transmitting-side device, to further perform re-trainiing for the channel information (e.g., CSI) recovery accuracy under different Payloads.

In some embodiments, under different channel information feedback payload configurations (that is, the encoding network supports that the feedback bitstreams with multiple kinds of feedback payloads are taken as the outputs), the encoding networks are different (e.g., using different model weight parameters) and the decoding networks are the same (e.g., using the same model weight parameters). In this case, on the basic of the encoding network (that is, encoding networks are the same under different channel information feedback payload configurations, e.g., using the same model weight parameters) and the decoding network (that is, decoding networks are the same under different channel information feedback payload configurations, e.g., using the same model weight parameters) obtained by the receiving-side device based on the hybrid iterative training method illustrated in FIG. 8 above, the transmitting-side device or the receiving-side device re-trains the encoding network based on the N channel information feedback payload configurations in a case where the decoding network remains unchanged.

Specifically, for example, re-training based on hybrid iteration: on the basic of the encoding network (that is, the encoding networks are the same under different Payloads, e.g., using the same model weight parameters) and decoding network (that is, the decoding networks are the same under different Payloads, e.g., using the same model weight parameters) obtained by using the hybrid iterative training method illustrated in FIG. 8 above, the encoding network may be re-trained on different Payloads by remaining the decoding network part unchanged. It should be noted that different encoding networks only differ in model weight parameters but maintain the same model structure.

In some embodiments, under different channel information feedback payload configurations (that is, the encoding network supports that the feedback bitstreams with multiple kinds of feedback payloads are taken as the outputs), the encoding networks are different (e.g., using different model weight parameters) and the decoding networks are the same (e.g., using the same model weight parameters). In this case, the receiving-side device may perform training on the decoding network based on the hybrid iteration. Specifically, for N channel information feedback payload configurations, the receiving-side device constructs N decoding models, respectively, where the N decoding models have a same model architecture, N is a positive integer, and N is larger than or equal to 2 (i.e., N≥2). The receiving-side device aligns a feedback bitstream corresponding to an i-th decoding model with the target feedback bitstream, the receiving-side device aligns a feedback bitstream corresponding to an (i+k)-th decoding model with the target feedback bitstream, and the transmitting-side device inputs each feedback bitstream aligned with the target feedback bitstream into a corresponding decoding model. The receiving-side device completes training once on the i-th decoding model during a j-th training period of model training, and then copies weight parameters of the i-th decoding model to the (i+k)-th decoding model. The receiving-side device completes training once on the (i+k)-th decoding model based on the copied weight parameters during a (j+1)-th training period of model training, and copies weight parameters of the (i+k)-th decoding model to the i-th decoding model. Where the i-th decoding model or the (i+k)-th decoding model after S training periods is the decoding network, i, j, k and S are all positive integers, and i plus k is less than or equal to N (i.e., i+k≤N).

It should be noted that the i-th decoding model performs hybrid training iterations with the (i+k)-th decoding model, that is, in the persent embodiment, the N decoding models perform hybrid training iterations in pairs, or the N decoding models perform serial hybrid training iterations (e.g., the first decoding model performs hybrid training iterations with the second decoding model, the second decoding model performs hybrid training iterations with the third decoding model, the third decoding model performs hybrid training iterations with the fourth decoding model, and so on; definitely, other serial manners may also be adopted, which are not limited in the embodiments of the present disclosure), to ensure that each decoding model is subjected to at least one hybrid training iteration in pairs, thereby ensuring that the trained decoding network is adapted to the N channel information feedback payload configurations.

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Config 1) and configuration 2 (Config 2), respectively, and Config 1 and Config 2 are different in the first dimension. In addition, two different kinds of feedback payload configurations are considered and denoted as payload 1 (Payload 1) and payload 1 (Payload 2), respectively, in which the length of Payload 1 feedback bitstream is L1, the length of Payload 2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the same Config and different Payloads, a bitstream interception and hybrid iterative training method is adopted to implement scalable encoding network. Taking Config1 as an example, Config1 needs to adapt to two kinds of feedback bit payloads, Payload1 and Payload2. Specifically, as illustrated in FIG. 12, the hybrid training iteration method is as follows: for Payload1 and Payload2, two decoding models are constructed and denoted as Model1 (decoding model) and Model2 (decoding model), respectively, both of which use the same decoding model architecture. However, for the model of Payload2, Model2, only first L2 bits are intercepted as valid input when feeding back bits, and the unfed back bits with (L1-L2) length are defaults to 0 when inputting to the decoding model. During the j-th training period of training process, firstly, training is completed on (Config1-Payload1) once, and the decoding model weights of Model1 are copied to Model2. During the (j+1)-th training period of training process, training of Model2 is completed on (Config1-Payload2) once based on the copied weights, and the decoding model weights of Model2 are copied to Model1. The above training process is iterated for multiple rounds. The weights of Model1 are consistent with those of Model2, and the weight model is retained to be a configuration to adapt to different payloads. The transmitting-side device may adopt different encoding networks for different payloads, where the model structures of different encoding networks may be different. Under the hybrid iterative training method, the trained decoding network may be flexibly adapted to the feedback payload configurations with L1 length and L2 length.

Specifically, by using the scalable decoding network, the receiving-side (e.g., the network side) may support the transmitting-side (e.g., the UE side) to implement different designs of encoding network, that is, the encoding network may be UE-specific and the encoding network model may be transparent to the network side. Therefore, when the UE accesses one cell, the network may transmit pre-trained encoding network and decoding network models to different UE sides. When the Payload update occurs at the UE in a subsequent stage, different UEs may implement model update and switching of the encoding network through local retraining at the UE side. In such process, the decoding network at the network side remains unchanged, which may be adapted to the encoding networks of different UEs with different Payloads. When the encoding network model weights corresponding to different Payloads are stored at the UE side and the network side instructs Payload to the UE through MAC CE and/or DCI using a joint or segmented approach, the UE switches the encoding network model automatically according to the correspondence between the Payload and the encoding network model, to achieve better CSI feedback performance.

In some embodiments, in a case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, the transmitting-side device may perform training on the encoding network and decoding network. Specifically, for N channel information feedback payload configurations, the transmitting-side device constructs N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2). For M physical resource configurations associated with channel information feedback, the transmitting-side device performs pre-processing on channel information corresponding to each of the M physical resource configurations to align the channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2). The transmitting-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the transmitting-side device inputs each feedback bitstream aligned with the target feedback bitstream into a corresponding decoding model. The transmitting-side device completes training once on the i-th encoding model and a decoding model corresponding to the i-th encoding model during a j-th training period of model training, and then copies weight parameters of the i-th encoding model and weight parameters of the decoding model corresponding to the i-th encoding model to the (i+k)-th encoding model and a decoding model corresponding to the (i+k)-th encoding model, respectively. The transmitting-side device completes training once on the (i+k)-th encoding model and the decoding model corresponding to the (i+k)-th encoding model based on the copied weight parameters during a (j+1)-th training period of model training, and copies weight parameters of the (i+k)-th encoding model and weight parameters of the decoding model corresponding to the (i+k)-th encoding model to the i-th encoding model and the decoding model corresponding to the i-th encoding model, respectively. Where the i-th encoding model or the (i+k)-th encoding model after S training periods is the encoding network, and the decoding model corresponding to the i-th encoding model or the decoding model corresponding to the (i+k)-th encoding model after the S training periods is the decoding network corresponding to the encoding network, i, j, k and S are all positive integers, and i plus k is less than or equal to N (i.e., i+k≤N).

In some embodiments, in the case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, the receiving-side device may perform training on the encoding network and the decoding network. Specifically, for N channel information feedback payload configurations, the receiving-side device constructs N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2). For M physical resource configurations associated with channel information feedback, the receiving-side device aligns the channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2). The receiving-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the transmitting-side device inputs each feedback bitstream aligned with the target feedback bitstream into a corresponding decoding model. The receiving-side device completes training once on the i-th encoding model and a decoding model corresponding to the i-th encoding model during a j-th training period of model training, and then copies weight parameters of the i-th encoding model and weight parameters of the decoding model corresponding to the i-th encoding model to the (i+k)-th encoding model and a decoding model corresponding to the (i+k)-th encoding model, respectively. The receiving-side device completes training once on the (i+k)-th encoding model and the decoding model corresponding to the (i+k)-th encoding model based on the copied weight parameters during a (j+1)-th training period of model training, and copies weight parameters of the (i+k)-th encoding model and weight parameters of the decoding model corresponding to the (i+k)-th encoding model to the i-th encoding model and the decoding model corresponding to the i-th encoding model, respectively. Where the i-th encoding model or the (i+k)-th encoding model after S training periods is the encoding network, and the decoding model corresponding to the i-th encoding model or the decoding model corresponding to the (i+k)-th encoding model after the S training periods is the decoding network, i, j, k and S are all positive integers, and i plus k is less than or equal to N (i.e., i+k≤N).

It should be noted that the i-th encoding model and the decoding model corresponding to the i-th encoding model perform hybrid training iterations with the (i+k)-th encoding model and the decoding model corresponding to the (i+k)-th encoding model, that is, in the persent embodiment, the N encoding models perform hybrid training iterations in pairs and the N decoding models perform hybrid training iterations in pairs, or the N encoding models perform serial hybrid training iterations and the N decoding models perform serial hybrid training iterations (for example, the first encoding model and its corresponding decoding model perform hybrid training iterations with the second encoding model and its corresponding decoding model, the second encoding model and its corresponding decoding model perform hybrid training iterations with the third encoding model and its corresponding decoding model, the third encoding model and its corresponding decoding model perform hybrid training iterations with the fourth encoding model and its corresponding decoding model, and so on, definitely, other serial manners may also be adopted, which are not limited in the embodiments of the present disclosure), to ensure that each encoding model and a respective decoding model corresponding to each encoding model are subjected to at least one hybrid training iteration in pairs, thereby ensuring that the trained encoding network and decoding network are adapted to the N channel information feedback payload configurations.

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Config1) and configuration 2 (Config2), respectively, and Config1 and Config2 are different in the first dimension. In addition, two different kinds of feedback payload configurations are considered and denoted as payload 1 (Payload1) and payload 1 (Payload2), respectively, in which the length of Payload1 feedback bitstream is L1, the length of Payload2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the different Configs and different Payloads, a bitstream interception and hybrid iterative training method is adopted to implement the scalable encoding network and decoding network. Config1 and Config2 need to adapt to two kinds of feedback bit payloads, Payload1 and Payload2. As illustrated in FIG. 13, the hybrid training iteration method is as follows: if Config1 is longer than Config2 in the first dimension (for example, Config1 is configured with 32 transmitting antenna ports and Config2 is configured with 16 transmitting antenna ports), 0-padding pre-processing is performed on Config2 (for example, the input corresponding to Config2 is padded with 0 in the first dimension, so as to aligned with Config1). Further, for Config1+Payload1 and Config2+Payload2, two sets of encoding model+decoding model are constructed and denoted as Model1 (encoding model+decoding model) and Model2 (encoding model+decoding model), respectively, both of which use the same encoding model architecture and decoding model architecture. However, for the model of Config2+Payload2, i.e., Model2, only first L2 bits are intercepted as valid input when feeding back bits, and the unfed back bits with L1-L2 length are defaulted to 0 when inputting to the CSI decoder. During the j-th training period of training process, firstly, training is completed once on (Config1-Payload1), and meanwhile, the encoding model weights and decoding model weights of Model1 are copied to Model2, respectively. During the (j+1)-th training period of training process, training of Model2 is completed once on (Config2-Payload2) based on the copied weights, and the encoding model weights and decoding model weights of Model2 are copied to Model1, respectively. The above training process is iterated for multiple rounds. The weights of Model1 are consistent with those of Model2, and the weight model is retained to be a configuration to adapt to different payloads. Under the hybrid iterative training method, the trained encoding network and decoding network may be flexibly adapted to the feedback payload configurations with L1 length and L2 length.

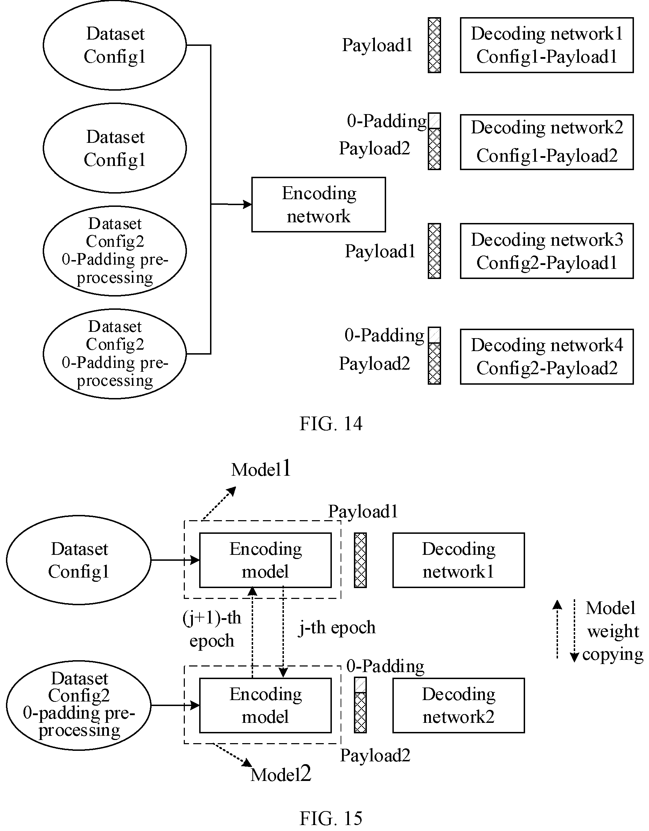

In the embodiments of the present disclosure, in the case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, the encoding network and the decoding network share the same model weight parameters. Considering that the encoding network and the decoding network may have a certain performance loss in the recovery accuracy of channel information (e.g., CSI) due to the scalability of adapting to multiple channel information feedback payload configurations, a design of the same encoding networks (e.g., using the same model weight parameters) and different decoding networks (e.g., using different model weight parameters) under different channel information feedback payload configurations and different physical resource configurations associated with channel information feedback may be considered. Specifically, as illustrated in FIG. 14, still taking a total of 4 sets of two different Configs and two different Payloads as an example, different sets of Config and Payload share the same encoding network, and the decoding network may adopt different model weight parameters since the decoding network is deployed at the receiving-side device, to further perform re-trainiing for the channel information (e.g., CSI) recovery accuracy under different sets of Config and Payload.

In some embodiments, under different channel information feedback payload configurations and different physical resource configurations associated with channel information feedback (that is, the encoding network supports that the feedback bitstreams with multiple kinds of feedback payloads are taken as the outputs, and the encoding network supports that the channel information aligned with the target channel information in the first dimensions obtained after pre-processing is performed on the channel information in multiple kinds of first dimensions is taken as the input), the encoding networks are the same (e.g., using the same model weight parameters) and the decoding networks are different (e.g., using different model weight parameters). In this case, on the basic of the encoding network (that is, encoding networks are the same under different channel information feedback payload configurations, e.g., using the same model weight parameters) and the decoding network (that is, decoding networks are the same under different channel information feedback payload configurations, e.g., using the same model weight parameters) obtained by the transmitting-side device based on the hybrid iterative training method illustrated in FIG. 13 above, the transmitting-side device or the receiving-side device re-trains the decoding network corresponding to the encoding network based on the N channel information feedback payload configurations and the M physical resource configurations associated with channel information feedback in a case where the encoding network remains unchanged.

Specifically, for example, re-training based on hybrid iteration: on the basic of the encoding network (that is, the encoding networks are the same under different Configs and different Payloads, e.g., using the same model weight parameters) and decoding network (that is, the decoding networks are the same under different Configs and different Payloads, e.g., using the same model weight parameters) obtained by using the hybrid iterative training method illustrated in FIG. 13 above, the decoding network may be re-trained on different sets of Config and Payload by remaining the encoding network part unchanged. It should be noted that different decoding networks only differ in model weight parameters but maintain the same model structure.

In some embodiments, under different channel information feedback payload configurations and different physical resource configurations associated with channel information feedback (that is, the encoding network supports that the feedback bitstreams with multiple kinds of feedback payloads are taken as the outputs, and the encoding network supports that the channel information aligned with the target channel information in the first dimensions obtained after pre-processing is performed on the channel information in multiple kinds of first dimensions is taken as the input), the encoding networks are the same (e.g., using the same model weight parameters) and the decoding networks are different (e.g., using different model weight parameters). In this case, the transmitting-side device may train the encoding networks based on hybrid iteration.

Specifically, in some embodiments, for N channel information feedback payload configurations, the transmitting-side device constructes N encoding models, respectively, where the N encoding models have a same model architecture, N is a positive integer, and N is larger than or equal to 2 (i.e., N≥2). For M physical resource configurations associated with channel information feedback, the transmitting-side device aligns channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2). The transmitting-side device performs post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and the transmitting-side device inputs each feedback bitstream aligned with the target feedback bitstream into a decoding model. The transmitting-side device completes training once on the i-th encoding model during a j-th training period of model training, and then copies weight parameters of the i-th encoding model to the (i+k)-th encoding model. The transmitting-side device completes training once on the (i+k)-th encoding model based on the copied weight parameter during a (j+1)-th training period of model training, and copies weight parameters of the (i+k)-th encoding model to the i-th encoding model. Where the i-th encoding model or the (i+k)-th encoding model after S training periods is the encoding network, i, j, k, and S are all positive integers, and i plus k is less than or equal to N (i.e., i+k≤N).

It should be noted that the i-th encoding model performs hybrid training iterations with the (i+k)-th encoding model, that is, in the persent embodiment, the N encoding models perform hybrid training iterations in pairs, or the N encoding models perform serial hybrid training iterations (e.g., the first encoding model performs hybrid training iterations with the second encoding model, the second encoding model performs hybrid training iterations with the third encoding model, the third encoding model performs hybrid training iterations with the fourth encoding model, and so on; definitely, other serial manners may also be adopted, which are not limited in the embodiments of the present disclosure), to ensure that each encoding model is subjected to at least one hybrid training iteration in pairs, thereby ensuring that the trained encoding network is adapted to the N channel information feedback payload configurations.

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Configl) and configuration 2 (Config2), respectively, and Config1 and Config2 are different in the first dimension. In addition, two different kinds of feedback payload configurations are considered and denoted as payload 1 (Payloadl) and payload 1 (Payload2), respectively, in which the length of Payload1 feedback bitstream is L1, the length of Payload2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the different Configs and different Payloads, a bitstream interception and hybrid iterative training method is adopted to implement scalable encoding network. Config1 and Config2 need to adapt to two kinds of feedback bit payloads, Payload1 and Payload2. Specifically, as illustrated in FIG. 15, the hybrid training iteration method is as follows: if Config1 is longer than Config2 in the first dimension (for example, Config1 is configured with 32 transmitting antenna ports and Config2 is configured with 16 transmitting antenna ports), 0-padding pre-processing is performed on Config2 (for example, the input corresponding to Config2 is padded with 0 in the first dimension, so as to aligned with Config1). Further, for Config1-Payload1 and Config2-Payload 2, two encoding models are constructed and denoted as Model1 (encoding model) and Model2 (encoding model), respectively, both of which use the same encoding model architecture. However, for the model of Config2-Payload2, i.e., Model2, only first L2 bits are intercepted as valid input when feeding back bits, and the unfed back bits with L1-L2 length are defaulted to 0 when inputting to the decoding network. During the j-th training period of training process, firstly, training is completed once on (Config1-Payload1), and meanwhile, the encoding model weights of Model1 are copied to Model2. During the (j+1)-th training period of training process, training of Model2 is completed once on (Config2-Payload2) based on the copied weights, and the encoding model weights of Model2 are copied to Model1. The above training process is iterated for multiple rounds. The weights of Model1 are consistent with those of Model2, and the weight model is retained to be a configuration to adapt to different Configs and Payloads. The receiving-side device may adopt different decoding networks for different Configs and payloads, where the model structures of different decoding networks may be different. Under the hybrid iterative training method, the trained encoding network may be flexibly adapted to the feedback payload configurations with L1 length and L2 length.

Specifically, since the encoding network is deployed at the transmitting side (e.g., the UE side and does not change with the change of Config and Payload configuration, no additional encoding network model storage and download payload is required. However, the decoding network is deployed at the receiving-side (e.g., the network side), and the adjustment of its model weight and model selection may be directly adjusted by the receiving-side device (e.g., the network device) according to the configuration currently served for the transmitting-side device (UE). This process is transparent to the transmitting-side device (UE) and may be implemented and determined by the receiving-side device (e.g., the network device). Under such operation method, the receiving-side device (e.g., the network device) may still indicate Config and Payload to the transmitting-side device (UE), and implement the adaptation of the decoding network locally.

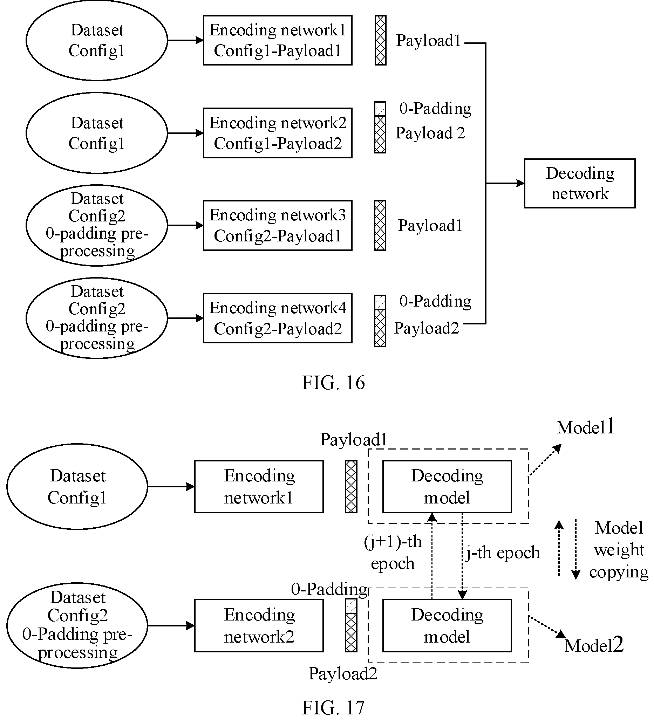

In the embodiments of the present disclosure, in a case where the encoding network supports that the feedback bitstreams with multiple kinds of feedback payloads are taken as the outputs, the decoding network supports that the aligned feedback bitstreams obtained after pre-processing is performed on the feedback bitstreams with multiple kinds of feedback payloads are taken as the inputs, the encoding network supports that the channel information aligned in the first dimensions obtained after pre-processing is performed on the channel information in multiple kinds of first dimensions is taken as the input, and after post-processing is performed, the outputs of the decoding network correspond to the channel information in multiple kinds of first dimensions, the encoding network and the decoding network share the same model weight parameters. Considering that the encoding network and the decoding network may have a certain performance loss in the recovery accuracy of channel information (e.g., CSI) due to the scalability of adapting to multiple channel information feedback payload configurations, a design of different encoding networks (e.g., using the different model weight parameters) and the same decoding networks (e.g., using the same model weight parameters) under different channel information feedback payload configurations and different physical resource configurations associated with channel information feedback may be considered. Specifically, as illustrated in FIG. 16, still taking a total of 4 sets of two different Configs and two different Payloads as an example, different sets of Config and Payload share the same decoding network, and the encoding network may adopt different model weight parameters since the encoding network is deployed at the transmitting-side device, to further perform re-trainiing for the channel information (e.g., CSI) recovery accuracy under different sets of Config and Payload.

In some embodiments, under different channel information feedback payload configurations and different physical resource configurations associated with channel information feedback (that is, the encoding network supports that the feedback bitstreams with multiple kinds of feedback payloads are taken as the outputs, and after post-processing is performed, the outputs of the decoding network correspond to the channel information in multiple kinds of first dimensions), the encoding networks are different (e.g., using different model weight parameters) and the decoding networks are the same (e.g., using the same model weight parameters). In this case, on the basic of the encoding network (that is, encoding networks are the same under different channel information feedback payload configurations, e.g., using the same model weight parameters) and the decoding network (that is, decoding networks are the same under different channel information feedback payload configurations, e.g., using the same model weight parameters) obtained by the receiving-side device based on the hybrid iterative training method illustrated in FIG. 13 above, the transmitting-side device or the receiving-side device re-trains the encoding network based on the N channel information feedback payload configurations and the M physical resource configurations associated with channel information feedback in a case where the decoding network remains unchanged.

Specifically, for example, re-training based on hybrid iteration: on the basic of the encoding network (that is, the encoding networks are the same under different Configs and different Payloads, e.g., using the same model weight parameters) and decoding network (that is, the decoding networks are the same under different Configs and different Payloads, e.g., using the same model weight parameters) obtained by using the hybrid iterative training method illustrated in FIG. 13 above, the encoding network may be re-trained on different sets of Config and Payload by remaining the decoding network part unchanged. It should be noted that different encoding networks only differ in model weight parameters but maintain the same model structure.

In some embodiments, under different channel information feedback payload configurations and different physical resource configurations associated with channel information feedback (that is, the encoding network supports that the feedback bitstreams with multiple kinds of feedback payloads are taken as the outputs, the decoding network supports that the aligned feedback bitstreams obtained after pre-processing is performed on the feedback bitstreams with multiple kinds of feedback payloads are taken as the inputs, and and after post-processing is performed, the outputs of the decoding network correspond to the channel information in multiple kinds of first dimensions), the encoding networks are different (e.g., using different model weight parameters) and the decoding networks are the same (e.g., using the same model weight parameters). In this case, the receiving-side device may perform training on the decoding network based on the hybrid iteration. Specifically, for N channel information feedback payload configurations, the receiving-side device constructs N decoding models, respectively, where the N decoding models have a same model architecture, N is a positive integer, and N is larger than or equal to 2 (i.e., N≥2). For M physical resource configurations associated with channel information feedback, the receiving-side device performs pre-processing on channel information corresponding to each of the M physical resource configurations in the first dimension, to align the channel information corresponding to each of the M physical resource configurations with the target channel information in the first dimension, to obtain an input of the encoding network corresponding to each of the M physical resource configurations, where M is a positive integer, and M is larger than or equal to 2 (i.e., M≥2). The receiving-side device aligns a feedback bitstream corresponding to an i-th decoding model with the target feedback bitstream, the receiving-side device aligns a feedback bitstream corresponding to an (i+k)-th decoding model with the target feedback bitstream, and the transmitting-side device inputs each feedback bitstream aligned with the target feedback bitstream into a corresponding decoding model. The receiving-side device completes training once on the i-th decoding model during a j-th training period of model training, and then copies weight parameters of the i-th decoding model to the (i+k)-th decoding model; the receiving-side device completes training once on the (i+k)-th decoding model based on the copied weight parameter during a (j+1)-th training period of model training, and copies weight parameters of the (i+k)-th decoding model to the i-th decoding model. Where the i-th decoding model or the (i+k)-th decoding model after S training periods is the decoding network, i, j, k and S are all positive integers, and i plus k is less than or equal to N (i.e., i+k≤N).

It should be noted that the i-th decoding model performs hybrid training iterations with the (i+k)-th decoding model, that is, in the persent embodiment, the N decoding models perform hybrid training iterations in pairs, or the N decoding models perform serial hybrid training iterations (e.g., the first decoding model performs hybrid training iterations with the second decoding model, the second decoding model performs hybrid training iterations with the third decoding model, the third decoding model performs hybrid training iterations with the fourth decoding model, and so on; definitely, other serial manners may also be adopted, which are not limited in the embodiments of the present disclosure), to ensure that each decoding model is subjected to at least one hybrid training iteration in pairs, thereby ensuring that the trained decoding network is adapted to the N channel information feedback payload configurations.

Specifically, for example, taking the feature vectors on the multiple sub-bands of feedback CSI as an example, the dataset with two different kinds of physical resource configurations associated with channel information feedback is considered for explanation, in which the two different kinds of physical resource configurations associated with channel information feedback are denoted as configuration 1 (Configl) and configuration 2 (Config2), respectively, and Config1 and Config2 are different in the first dimension. In addition, two different kinds of feedback payload configurations are considered and denoted as payload 1 (Payload1) and payload 1 (Payload2), respectively, in which the length of Payload1 feedback bitstream is L1, the length of Payload2 feedback bitstream is L2, and L1 is larger than L2 (i.e., L1>L2). For the dataset with two kinds of physical resource configurations and two different kinds of feedback payload configurations, four combinations of physical resource configurations and feedback payload configurations are generated, such as {Config x-Payload y}, where the values of x and y may be taken as 1 or 2, respectively. Specifically, for the different Configs and different Payloads, a bitstream interception and hybrid iterative training method is adopted to implement scalable encoding network. Config1 and Config2 need to adapt to two kinds of feedback bit payloads, Payload1 and Payload2. Specifically, as illustrated in FIG. 17, the hybrid training iteration method is as follows: if Config1 is longer than Config2 in the first dimension (for example, Config1 is configured with 32 transmitting antenna ports and Config2 is configured with 16 transmitting antenna ports), 0-padding pre-processing is performed on Config2 (for example, the input corresponding to Config2 is padded with 0 in the first dimension, so as to aligned with Config1). Further, for Config1-Payload1 and Config2-Payload 2, two decoding models are constructed and denoted as Model1 (decoding model) and Model2 (decoding model), respectively, both of which use the same decoding model architecture. However, for the model of Config2-Payload2, i.e., Model2, only first L2 bits are intercepted as valid input when feeding back bits, and the unfed back bits with (L1-L2) length are defaults to 0 when inputting to the decoding model. During the j-th training period of training process, firstly, training is completed on (Config1-Payload1) once, and the decoding model weights of Model1 are copied to Model2. During the (j+1)-th training period of training process, training of Model2 is completed on (Config2-Payload2) once based on the copied weights, and the decoding model weights of Model2 are copied to Model1. The above training process is iterated for multiple rounds. The weights of Model1 are consistent with those of Model2, and the weight model is retained to be a configuration to adapt to different Configs and Payloads. The transmitting-side device may adopt different encoding networks for different Configs and payloads, where the model structures of different encoding networks may be different. Under the hybrid iterative training method, the trained decoding network may be flexibly adapted to the feedback payload configurations with L1 length and L2 length.

Specifically, by using the scalable decoding network, the receiving-side (e.g., the network side) may support the transmitting-side (e.g., the UE side) to implement different designs of encoding network, that is, the encoding network may be UE-specific and the encoding network model may be transparent to the network side. Therefore, when the UE accesses one cell, the network may transmit pre-trained encoding network and decoding network models to different UE sides. When the Config and Payload update occurs at the UE in a subsequent stage, different UEs may implement model update and switching of the encoding network through local retraining at the UE side. In such process, the decoding network at the network side remains unchanged, which may be adapted to the encoding networks of different UEs with different Configs and Payloads. When the encoding network model weights corresponding to different Configs and Payloads are stored at the UE side and the network side instructs Config and Payload to the UE through MAC CE and/or DCI using a joint or segmented approach, the UE switches the encoding network model automatically according to the correspondence between the set of (Config-Payload) and the encoding network model, to achieve better CSI feedback performance.

It should be noted that operations such as interception and 0-padding in the above embodiments may be implemented in different ways, for example, which may be implemented by continuously padding 0 backward, or padding 0 forward, or interpolating 0 in the first dimension. Different implementations require to correspond different models, but their performance will not be different. Therefore, the embodiments of the present disclosure mainly take the continuous padding 0 backward as an implementation method, and other implementation methods of interception and 0-padding are all within the protection scope of the present disclosure. In addition, for the unfed back bitstream with L1-L2 length are defaulted to 0 at the decoding network side, however, other methods such as the unfed back bitstream with L 1-L2 length being defaulted to 1 may also be implemented. The embodiments of the present disclosure mainly support the implementation method of defaulting 0, but other default completion methods of the unfed back bitstream are also within the scope of protection of the present disclosure.

In some embodiments, the encoding network model and decoding network model with scalability may be obtained based on the above embodiments, to adapt to different channel information feedback payload configurations and different physical resource configurations associated with channel information feedback. The encoding network is shared by all transmitting-side devices (e.g., the UEs) in the cell, that is, different transmitting-side devices (e.g., the UEs) with different configurations share the model weight parameters of one encoding network. In addition, when the channel environments of different cells are similar, the encoding network model may also be shared among cells, and the transmitting-side device (e.g., the UE) does not need to re-download the encoding network model when entering a new cell. For the same encoding network model, since different pre-processing, post-processing and feedback bit interception operations are required when adapting to different Configs and Payloads, the receiving-side device (e.g., the network device) needs to indicate the Config and Payload configurations to the transmitting-side device (e.g., the UE) through MAC CE or DCI signaling, the transmitting-side device (e.g., the UE) performs pre-processing on the CSI input according to the indication, and intercepts the corresponding bitstream for feedback.

In some embodiments, the transmitting-side device receives first information; where the first information is used for indicating at least one of: physical resource configuration information associated with channel information feedback, or channel information feedback payload configuration information. Optionally, different physical resource configurations associated with channel information feedback are different in the first dimension.

Specifically, for example, the transmitting-side device receives the first information transmitted by the receiving-side device.

Specifically, for another example, the transmitting-side device receives the first information transmitted by other devices other than the receiving-side device.

Optionally, the physical resource configuration information associated with channel information feedback includes M physical resource configurations associated with channel information feedback, or the physical resource configuration information associated with channel information feedback is an identifier or index of a certain physical resource configuration among the pre-configured M physical resource configurations associated with channel information feedback, where, M is a positive integer, and M is larger than or equal to 2 (i.e., M≥2).

Optionally, the channel information feedback payload configuration information includes N channel information feedback payload configurations, or the channel information feedback payload configuration information is an identifier or index of a certain channel information feedback payload configuration among the N pre-configured channel information feedback payload configurations. N is a positive integer, and N is larger than or equal to 2 (i.e., N≥2).

In some embodiments, the first information is carried by at least one of following signaling:

radio resource control (RRC) signaling, a media access control control element (MAC CE), downlink control information (DCI) or sidelink control information (SCI).

In some embodiments, the first information includes a first information field; where the first information field is used for jointly indicating the physical resource configuration information associated with channel information feedback and the channel information feedback payload configuration information.

Specifically, for example, the first information field is used for jointly indicating (Config x-Payload y), where Config represents the physical resource configuration associated with channel information feedback, and Payload represents the channel information feedback payload configuration. That is, an indication field indicating (x, y) is added to the first information, and $\lceil \log_2 W \rceil$ bits are adopted from the pre-configured configuration table of a total of W group (Config x-Pay-

load y)s (here, $\lceil \cdot \rceil$ means round up to an integer) for indication. It should be noted that the advantage of the joint indication is that different numbers of Payload configurations may be implemented for different Configs. For example, for a smaller Config in the first dimension, the allowable Payloads are all lower and larger Payload feedbacks are not supported; while for a larger Config with in the first dimension, the allowable Payloads are all larger and smaller Payload feedbacks are not supported.

In some embodiments, the first information includes a second information field and a third information field; where the second information field is used for indicating the physical resource configuration information associated with channel information feedback, and the third information field is used for indicating the channel information feedback payload configuration information.

Specifically, for example, the second information field indicates Config x, where Config represents the physical resource configuration associated with channel information feedback; and the third information field indicates Payload y, where Payload represents the channel information feedback payload configuration. That is, indication fields indicating x and y are added to the first information, where Config has pre-configured X groups and Payload has pre-configured Y groups, which are indicated by $\lceil \log_2 X \rceil$ bits and $\lceil \log_2 Y \rceil$ bits, respectively. The advantage of the segment indication is that more flexible scheduling of Config and Payload signaling may be achieved.

In some embodiments, the transmitting-side device receives second information and third information; where the second information is used for indicating physical resource configuration information associated with channel information feedback, and the third information is used for indicating channel information feedback payload configuration information. Optionally, different physical resource configurations associated with channel information feedback are different in the first dimension.

Specifically, for example, the transmitting-side device receives the second information and the third information transmitted by the receiving-side device.

Specifically, for another example, the transmitting-side device receives the second information and the third information transmitted by other devices other than the receiving-side device.

In some embodiments, the second information is carried by at least one of following signaling: RRC signaling, a MAC CE, DCI or SCI; and/or the third information is carried by at least one of following signaling: RRC signaling, a MAC CE, DCI or SCI.

Therefore, in the embodiments of the present disclosure, the transmitting-side device encodes the first channel information through the encoding network, to obtain the first feedback bitstream, and the transmitting-side device transmits the first feedback bitstream to the receiving-side device, where the first channel information is the channel information aligned with the target channel information in the first dimension obtained after pre-processing is performed, and/or the first feedback bitstream is the feedback bitstream aligned with the target feedback bitstream obtained after post-processing is performed on the feedback bitstream output by the encoding network. That is, the encoding network supports that the channel information aligned with the target channel information in the first dimensions obtained after pre-processing is performed on the channel information in multiple kinds of first dimensions is taken as the input, and/or the encoding network supports that the feedback bitstreams with multiple kinds of feedback payloads are taken as the outputs; and the transmitting-side device transmits the feedback bitstreams aligned with the target feedback bitstream obtained after post-processing is performed on the feedback bitstreams output by the encoding network to the receiving-side device. The receiving-side device receives the first feedback bitstream transmitted by the transmitting-side device, and the receiving-side device decodes the first feedback bitstream through the decoding network, to obtain the first channel information, where the first feedback bitstream is the feedback bitstream aligned with the target feedback bitstream obtained after post-processing is performed on the feedback bitstream output by the encoding network corresponding to the decoding network, and/or the first channel information is the channel information different from the target channel information in the first dimension obtained after post-processing is performed on the channel information that is output by the decoding network and aligned with the target channel information in the first dimension. That is, the decoding network supports that the feedback bitstreams aligned with the target feedback bitstream obtained after pre-processing is performed on the feedback bitstreams with multiple kinds of feedback payloads are taken as the inputs, and/or after post-processing is performed, the outputs of the decoding network correspond to the channel information in multiple kinds of first dimensions. That is, through the above technical solutions, the channel information (such as, CSI) feedback may adapt to the different channel information input and output dimensions and different feedback payload configurations, which improves the feedback performance of the channel information (such as, CSI), and also improves the flexibility and scalability of the encoding network and the decoding network in the actual deployment.

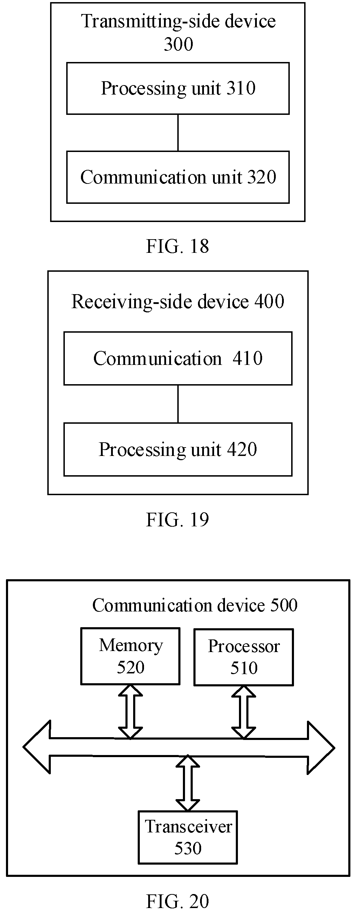

The method embodiments of the present disclosure are described in detail with reference to FIGS. 7 to 17 above, and device embodiments of the present application will be described in detail with reference to FIGS. 18 to 22 below. It should be understood that the device embodiments and the method embodiments correspond to each other, and similar descriptions may be made with reference to the method embodiments.

FIG. 18 illustrates a schematic block diagram of a transmitting-side device 300 according to an embodiment of the present disclosure. As illustrated in FIG. 18, the transmitting-side device 300 includes:

> a processing unit 310, configured to encode first channel information through an encoding network, to obtain a first feedback bitstream; and
> a communication unit 320, configured to transmit the first feedback bitstream to a receiving-side device;
> where the first channel information is channel information aligned with target channel information in a first dimension obtained after pre-processing is performed, and/or the first feedback bitstream is a feedback bitstream aligned with a target feedback bitstream obtained after post-processing is performed on feedback bitstream output by the encoding network; and
> the first dimension is at least one of: a number of transmitting antenna ports, a number of sub-bands, a number of resource blocks (RBs), a number of delay paths, a number of symbols, or a number of slots.

In some embodiments, under different physical resource configurations associated with channel information feedback and/or under different channel information feedback payload configurations, the encoding network is same or model weight parameters of the encoding network are same; and
the different physical resource configurations associated with channel information feedback are different in the first dimension.

In some embodiments, in a case where the encoding network supports that the channel information aligned in the first dimensions obtained after pre-processing is performed on the channel information in multiple kinds of first dimensions is taken as the input, for M physical resource configurations associated with channel information feedback, the processing unit 310 is configured to perform pre-processing on channel information corresponding to each of the M physical resource configurations to align the channel information corresponding to each of the M physical resource configurations with the target channel information in the first dimension, to obtain an input of the encoding network corresponding to each of the M physical resource configurations, where M is a positive integer, and M is larger than or equal to 2 (i.e., M≥2).

In some embodiments, in a case where the first feedback bitstream is the feedback bitstream aligned with the target feedback bitstream obtained after post-processing is performed on the feedback bitstream output by the encoding network, for N channel information feedback payload configurations, the processing unit 310 is further configured to construct N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2);

> the processing unit 310 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a corresponding decoding model;
> the processing unit 310 is further configured to complete, during a j-th training period of model training, training once on the i-th encoding model and a decoding model corresponding to the i-th encoding model, and then copy weight parameters of the i-th encoding model and weight parameters of the decoding model corresponding to the i-th encoding model to the (i+k)-th encoding model and a decoding model corresponding to the (i+k)-th encoding model, respectively; and
> the processing unit 310 is further configured to complete, during a (j+1)-th training period of model training, training once on the (i+k)-th encoding model and the decoding model corresponding to the (i+k)-th encoding model based on the copied weight parameters, and copying weight parameters of the (i+k)-th encoding model and weight parameters of the decoding model corresponding to the (i+k)-th encoding model to the i-th encoding model and the decoding model corresponding to the i-th encoding model, respectively;
> where the i-th encoding model or the (i+k)-th encoding model after S training periods is the encoding network, the decoding model corresponding to the i-th encoding model or the decoding model corresponding to the (i+k)-th encoding model after the S training periods is a decoding network corresponding to the encoding network, i, j, k and S are all positive integers, and i plus k is less than or equal to N (i.e., i+k≤N).

In some embodiments, the processing unit 310 is further configured to re-train the decoding network corresponding to the encoding network based on the N channel information feedback payload configurations in a case where the encoding network remains unchanged.

In some embodiments, in a case where the first feedback bitstream is the feedback bitstream aligned with the target feedback bitstream obtained after post-processing is performed on the feedback bitstream output by the encoding network, for N channel information feedback payload configurations, the processing unit 310 is further configured to construct N encoding models, respectively, where the N encoding models have a same model architecture, N is a positive integer, and N is larger than or equal to 2 (i.e., N≥2);

the processing unit 310 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a decoding network;

the processing unit 310 is further configured to complete, during a j-th training period of model training, training once on the i-th encoding model, and then copy weight parameters of the i-th encoding model to the (i+k)-th encoding model; and

the processing unit 310 is further configured to complete, during a (j+1)-th training period of model training, training once on the (i+k)-th encoding model based on the copied weight parameters, and copy weight parameters of the (i+k)-th encoding model to the i-th encoding model;

where the i-th encoding model or the (i+k)-th encoding model after S training periods is the encoding network, i, j, k, and S are all positive integers, and i plus k is less than or equal to N (i.e., i+k≤N).

In some embodiments, in a case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, for N channel information feedback payload configurations, the processing unit 310 is further configured to construct N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2);

for M physical resource configurations associated with channel information feedback, the processing unit 310 is further configured to align channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2);

the processing unit 310 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a corresponding decoding model;

the processing unit 310 is further configured to complete, during a j-th training period of model training, training once on the i-th encoding model and a decoding model corresponding to the i-th encoding model, and then copy weight parameters of the i-th encoding model and weight parameters of the decoding model corresponding to the i-th encoding model to the (i+k)-th encoding model and a decoding model corresponding to the (i+k)-th encoding model, respectively; and

the processing unit 310 is further configured to complete, during a (j+1)-th training period of model training, training once on the (i+k)-th encoding model and the decoding model corresponding to the (i+k)-th encoding model based on the copied weight parameters, and copy weight parameters of the (i+k)-th encoding model and weight parameters of the decoding model corresponding to the (i+k)-th encoding model to the i-th encoding model and the decoding model corresponding to the i-th encoding model, respectively;

where the i-th encoding model or the (i+k)-th encoding model after S training periods is the encoding network, and the decoding model corresponding to the i-th encoding model or the decoding model corresponding to the (i+k)-th encoding model after the S training periods is a decoding network corresponding to the encoding network, i, j, k and S are all positive integers, and i plus k is less than or equal to N (i.e., i+k≤N).

In some embodiments, the processing unit 310 is further configured to re-train the decoding network corresponding to the encoding network based on the N channel information feedback payload configurations and the M physical resource configurations in a case where the encoding network remains unchanged.

In some embodiments, in a case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, for N channel information feedback payload configurations, the processing unit 310 is further configured to construct N encoding models, respectively, where the N encoding models have a same model architecture, N is a positive integer, and N is larger than or equal to 2 (i.e., N≥2);

for M physical resource configurations associated with channel information feedback, the processing unit 310 is further configured to perform pre-processing on channel information corresponding to each of the M physical resource configurations to align the channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2);

the processing unit 310 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a decoding model;

the processing unit 310 is further configured to complete, during a j-th training period of model training, training once on the i-th encoding model, and then copy weight parameters of the i-th encoding model to the (i+k)-th encoding model; and

the processing unit 310 is further configured to complete, during a (j+1)-th training period of model training, training once on the (i+k)-th encoding model based on the copied weight parameter, and copy weight parameters of the (i+k)-th encoding model to the i-th encoding model;

where the i-th encoding model or the (i+k)-th encoding model after S training periods is the encoding network, i, j, k, and S are all positive integers, and i plus k is less than or equal to N (i.e., i+k≤N).

In some embodiments, channel information is aligned with the target channel information by padding first placeholder information in the first dimension during pre-processing.

In some embodiments, the first placeholder information is 0.

In some embodiments, a feedback bitstream is aligned with the target feedback bitstream by padding second placeholder information during post-processing, or a feedback bitstream is aligned with the target feedback bitstream by intercepting part of bitstream during post-processing, or a feedback bitstream is aligned with the target feedback bitstream by deleting part of a bitstream during post-processing.

In some embodiments, the second placeholder information is 0 or 1.

In some embodiments, the communication unit 320 is further configured to receive first information;

where the first information is used for indicating at least one of: physical resource configuration information associated with channel information feedback, or channel information feedback payload configuration information.

In some embodiments, the first information includes a first information field; and the first information field is used for jointly indicating the physical resource configuration information associated with channel information feedback and the channel information feedback payload configuration information.

In some embodiments, the first information includes a second information field and a third information field; and the second information field is used for indicating the physical resource configuration information associated with channel information feedback, and the third information field is used for indicating the channel information feedback payload configuration information.

In some embodiments, the first information is carried by at least one of following signaling: radio resource control (RRC) signaling, a media access control control element (MAC CE), downlink control information (DCI) or sidelink control information (SCI).

In some embodiments, the communication unit 320 is further configured to receive second information and third information.

where the second information is used for indicating physical resource configuration information associated with channel information feedback, and the third information is used for indicating channel information feedback payload configuration information.

In some embodiments, the second information is carried by at least one of following signaling: RRC signaling, a MAC CE, DCI or SCI; and/or the third information is carried by at least one of following signaling: RRC signaling, a MAC CE, DCI or SCI.

In some embodiments, the target channel information is maximum channel information in the first dimension among channel information corresponding to each of M physical resource configurations associated with channel information feedback, and/or the target feedback bitstream is a maximum or minimum feedback bitstream among feedback bitstreams corresponding to each of N channel information feedback payload configurations;

where different physical resource configurations among the M physical resource configurations are different in the first dimension, M and N are both positive integers, M is larger than or equal to 2, and N is larger than or equal to 2 (i.e., M≥2 and N≥2).

In some embodiments, the above communication unit may be a communication interface or a transceiver, or an input/output interface of a communication chip or a system-on-chip. The processing unit may be one or more processors.

It should be understood that the transmitting-side device 300 according to the embodiments of the present disclosure may correspond to the transmitting-side device in the method embodiments of the present disclosure, and the above and other operations and/or functions of each unit in the transmitting-side device 300 are intend to implement the corresponding processes of the transmitting-side device in the method 200 illustrated in FIG. 7, which will not be repeated here for the sake of brevity.

FIG. 19 illustrates a schematic block diagram of a receiving-side device 400 according to an embodiment of the present disclosure. As illustrated in FIG. 19, the receiving-side device 400 includes:

a communication unit 410, configured to receive a first feedback bitstream transmitted by a transmitting-side device; and

a processing unit 420, configured to decode the first feedback bitstream through a decoding network, to obtain first channel information;

where the first feedback bitstream is a feedback bitstream aligned with a target feedback bitstream obtained after post-processing is performed on feedback bitstream output by an encoding network corresponding to the decoding network, and/or the first channel information is channel information different from target channel information in a first dimension obtained after post-processing is performed on channel information that is output by the decoding network and aligned with the target channel information in the first dimension; and

the first dimension is at least one of: a number of transmitting antenna ports, a number of sub-bands, a number of resource blocks (RBs), a number of delay paths, a number of symbols, or a number of slots.

In some embodiments, under different physical resource configurations associated with channel information feedback and/or under different channel information feedback payload configurations, the decoding network is same or model weight parameters of the decoding network are same; and

the different physical resource configurations associated with channel information feedback are different in the first dimension.

In some embodiments, in a case where the first channel information is the channel information different from the target channel information in the first dimension obtained after post-processing is performed on the channel information that is output by the decoding network and aligned with the target channel information in the first dimension, for M physical resource configurations associated with channel information feedback, the processing unit 420 is further configured to perform post-processing on channel information output by the decoding network, aligned with the target channel information in the first dimension and corresponding to each of the M physical resource configurations to delete first placeholder information in the channel information output by the decoding network and corresponding to each of the M physical resource configurations, to obtain channel information different from the target channel information in the first dimension and corresponding to each of the M physical resource configurations;

where an input of the encoding network corresponding to each of the M physical resource configurations is obtained by padding the first placeholder information to the channel information corresponding to each of the M physical resource configurations in the first dimension, M is a positive integer and M is larger than or equal to 2 (i.e., M≥2).

In some embodiments, in a case where the first feedback bitstream is the feedback bitstream aligned with the target feedback bitstream obtained after post-processing is performed on the feedback bitstream output by the encoding network corresponding to the decoding network, for N channel information feedback payload configurations, the processing unit 420 is further configured to construct N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2);

the processing unit 420 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a corresponding decoding model;

the processing unit 420 is further configured to complete, during a j-th training period of model training, training once on the i-th encoding model and a decoding model corresponding to the i-th encoding model, and then copy weight parameters of the i-th encoding model and weight parameters of the decoding model corresponding to the i-th encoding model to the (i+k)-th encoding model and a decoding model corresponding to the (i+k)-th encoding model, respectively;

the processing unit 420 is further configured to complete, during a (j+1)-th training period of model training, training once on the (i+k)-th encoding model and the decoding model corresponding to the (i+k)-th encoding model based on the copied weight parameters, and copy weight parameters of the (i+k)-th encoding model and weight parameters of the decoding model corresponding to the (i+k)-th encoding model to the i-th encoding model and the decoding model corresponding to the i-th encoding model, respectively;

where the i-th encoding model or the (i+k)-th encoding model after S training periods is the encoding network corresponding to the decoding network, the decoding model corresponding to the i-th encoding model or the decoding model corresponding to the (i+k)-th encoding model after the S training periods is the decoding network, i, j, k and S are all positive integers, and i plus k is less than or equal to N (i.e., i+k≤N).

In some embodiments, the processing unit 420 is further configured to re-train the encoding network corresponding to the decoding network based on the N channel information feedback payload configurations in a case where the decoding network remains unchanged.

In some embodiments, in a case where the first feedback bitstream is the feedback bitstream aligned with the target feedback bitstream obtained after post-processing is performed on the feedback bitstream output by the encoding network corresponding to the decoding network, for N channel information feedback payload configurations, the processing unit 420 is further configured to construct N decoding models, respectively, where the N decoding models have a same model architecture, N is a positive integer, and N is larger than or equal to 2 (i.e., N≥2);

the processing unit 420 is further configured to align a feedback bitstream corresponding to an i-th decoding model with the target feedback bitstream and align a feedback bitstream corresponding to an (i+k)-th decoding model with the target feedback bitstream, and the transmitting-side device inputs each feedback bitstream aligned with the target feedback bitstream into a corresponding decoding model;

the processing unit 420 is further configured to complete, during a j-th training period of model training, training once on the i-th decoding model, and then copy weight parameters of the i-th decoding model to the (i+k)-th decoding model; and

the processing unit 420 is further configured to complete, during a (j+1)-th training period of model training, training once on the (i+k)-th decoding model based on the copied weight parameters, and copy weight parameters of the (i+k)-th decoding model to the i-th decoding model;

where the i-th decoding model or the (i+k)-th decoding model after S training periods is the decoding network, i, j, k and S are all positive integers, and i plus k is less than or equal to N (i.e., i+k≤N).

In some embodiments, in a case where the first feedback bitstream is the feedback bitstream aligned with the target feedback bitstream obtained after post-processing is performed on the feedback bitstream output by the encoding network corresponding to the decoding network, and the first channel information is the channel information different from the target channel information in the first dimension obtained after post-processing is performed on the channel information that is output by the decoding network and aligned with the target channel information in the first dimension, for N channel information feedback payload configurations, the processing unit 420 is further configured to construct N encoding models and N decoding models, respectively, where the N encoding models correspond to the N decoding models, respectively, the N encoding models have a same model architecture, the N decoding models have a same model architecture, N is a positive integer, and N is larger than or equal to 2 (i.e., N≥2);

for M physical resource configurations associated with channel information feedback, the processing unit 420 is further configured to perform pre-processing on channel information corresponding to each of the M physical resource configurations to align the channel information corresponding to each of the M physical resource configurations with the target channel information in the first dimension, to obtain inputs of the N encoding models corresponding to each of the M physical resource configurations, where M is a positive integer, and M is larger than or equal to 2 (i.e., M≥2);

the processing unit 420 is further configured to perform post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and input each feedback bitstream aligned with the target feedback bitstream into a corresponding decoding model;

the processing unit 420 is further configured to complete, during a j-th training period of model training, training once on the i-th encoding model and a decoding model corresponding to the i-th encoding model, and then copy weight parameters of the i-th encoding model and weight parameters of the decoding model corresponding to the i-th encoding model to the (i+k)-th encoding model and a decoding model corresponding to the (i+k)-th encoding model, respectively; and

the processing unit 420 is further configured to complete, during a (j+1)-th training period of model training, training once on the (i+k)-th encoding model and the decoding model corresponding to the (i+k)-th encoding model based on the copied weight parameters, and copy weight parameters of the (i+k)-th encoding model and weight parameters of the decoding model corresponding to the (i+k)-th encoding model to the i-th encoding model and the decoding model corresponding to the i-th encoding model, respectively;

where the i-th encoding model or the (i+k)-th encoding model after S training periods is the encoding network corresponding to the decoding network, and the decoding model corresponding to the i-th encoding model or the decoding model corresponding to the (i+k)-th encoding model after the S training periods is the decoding network, i, j, k and S are all positive integers, and i plus k is less than or equal to N (i.e., i+k≤N).

In some embodiments, the processing unit 420 is further configured to re-training the encoding network corresponding to the decoding network based on the N channel information feedback payload configurations and the M physical resource configurations in a case where the decoding network remains unchanged.

In some embodiments, in a case where the first feedback bitstream is the feedback bitstream aligned with the target feedback bitstream obtained after post-processing is performed on the feedback bitstream output by the encoding network corresponding to the decoding network, and the first channel information is the channel information different from the target channel information in the first dimension obtained after post-processing is performed on the channel information that is output by the decoding network and aligned with the target channel information in the first dimension, for N channel information feedback payload configurations, the processing unit 420 is further configured to construct N decoding models, respectively, where the N decoding models have a same model architecture, N is a positive integer, and N is larger than or equal to 2 (i.e., N≥2);

for M physical resource configurations associated with channel information feedback, the processing unit 420 is further configured to perform pre-processing on channel information corresponding to each of the M physical resource configurations to align the channel information corresponding to each of the M physical resource configurations with the target channel information in the first dimension, to obtain an input of the encoding network corresponding to each of the M physical resource configurations, where M is a positive integer, and M is larger than or equal to 2 (i.e., M≥2);

the processing unit 420 is further configured to align a feedback bitstream corresponding to an i-th decoding model with the target feedback bitstream, align a feedback bitstream corresponding to an (i+k)-th decoding model with the target feedback bitstream, and input each feedback bitstream aligned with the target feedback bitstream into a corresponding decoding model;

the processing unit 420 is further configured to complete, during a j-th training period of model training, training once on the i-th decoding model, and then copy weight parameters of the i-th decoding model to the (i+k)-th decoding model; and

the processing unit 420 is further configured to complete, during a (j+1)-th training period of model training, training once on the (i+k)-th decoding model based on the copied weight parameter, and copy weight parameters of the (i+k)-th decoding model to the i-th decoding model;

where the i-th decoding model or the (i+k)-th decoding model after S training periods is the decoding network, i, j, k and S are all positive integers, and i plus k is less than or equal to N (i.e., i+k≤N).

In some embodiments, channel information is aligned with the target channel information by padding first placeholder information in the first dimension during pre-processing; and the channel information is channel information different from the target channel information in the first dimension obtained by deleting the first placeholder information in the first dimension during post-processing.

In some embodiments, the first placeholder information is 0.

In some embodiments, a feedback bitstream is aligned with the target feedback bitstream by padding second placeholder information during post-processing, or a feedback bitstream is aligned with the target feedback bitstream by intercepting part of a bitstream during post-processing, or a feedback bitstream is aligned with the target feedback bitstream by deleting part of a bitstream during post-processing.

In some embodiments, the second placeholder information is 0 or 1.

In some embodiments, the communication unit 410 is further configured to transmit first information;
where the first information is used for indicating at least one of: physical resource configuration information associated with channel information feedback, or channel information feedback payload configuration information.

In some embodiments, the first information includes a first information field; and the first information field is used for jointly indicating the physical resource configuration information associated with channel information feedback and the channel information feedback payload configuration information.

In some embodiments, the first information includes a second information field and a third information field; where the second information field is used for indicating the physical resource configuration information associated with channel information feedback, and the third information field is used for indicating the channel information feedback payload configuration information.

In some embodiments, the first information is carried by at least one of following signaling: radio resource control (RRC) signaling, a media access control control element (MAC CE), downlink control information (DCI) or sidelink control information (SCI).

In some embodiments, the communication unit 410 is further configured to transmit second information and third information.

where the second information is used for indicating physical resource configuration information associated with channel information feedback, and the third information is used for indicating channel information feedback payload configuration information.

In some embodiments, the second information is carried by at least one of following signaling: RRC signaling, a MAC CE, DCI or SCI; and/or the third information is carried by at least one of following signaling: RRC signaling, a MAC CE, DCI or SCI.

In some embodiments, the target channel information is maximum channel information in the first dimension among channel information corresponding to each of M physical resource configurations associated with channel information feedback, and/or the target feedback bitstream is a maximum or minimum feedback bitstream among feedback bitstreams corresponding to each of N channel information feedback payload configurations; and

different physical resource configurations among the M physical resource configurations are different in the first dimension, M and N are both positive integers, M is larger than or equal to 2, and N is larger than or equal to 2 (i.e., $M \geq 2$ or $N \geq 2$).

In some embodiments, the above communication unit may be a communication interface or a transceiver, or an input/output interface of a communication chip or a system-on-chip. The processing unit may be one or more processors.

It should be understood that the receiving-side device 400 according to the embodiment of the present disclosure may correspond to the receiving-side device in the method embodiments of the present disclosure, and the above and other operations and/or functions of each unit in the receiving-side device 400 are intend to implement the corresponding processes of the receiving-side device in the method 200 illustrated in FIG. 7, respectively, which will not be repeated here for the sake of brevity.

FIG. 20 is a schematic structural diagram of a communication device 500 provided in the embodiments of the present disclosure. The communication device 500 illustrated in FIG. 20 includes a processor 510, and the processor 510 may call a computer program from a memory and run the computer program, to implement the method in the embodiments of the present disclosure.

In some embodiments, as illustrated in FIG. 20, the communication device 500 may also include a memory 520. Here, the processor 510 may call a computer program from the memory 520 and run the computer program, to implement the method in the embodiments of the present disclosure.

The memory 520 may be a separate device independent from the processor 510, or may be integrated into the processor 510.

In some embodiments, as illustrated in FIG. 20, the communication device 500 may also include a transceiver 530, and the processor 510 may control the transceiver 530 to communicate with other devices, and specifically, to transmit information or data to other devices, or receive information or data transmitted by the other devices.

The transceiver 530 may include a transmitter and a receiver. The transceiver 530 may further include antenna(s). There may be one or more antennas.

In some embodiments, the processor 510 may implement the functions of the processing unit in the transmitting-side device, or the processor 510 may implement the functions of the processing unit in the receiving-side device, which will not be repeated here for the sake of brevity.

In some embodiments, the transceiver 530 may implement the functions of the communication unit in the transmitting-side device, which will not be repeated here for the sake of brevity.

In some embodiments, the transceiver 530 may implement the functions of the communication unit in the receiving-side device, which will not be repeated here for the sake of brevity.

In some embodiments, the communication device 500 may specifically be the receiving-side device of the embodiments of the present disclosure, and the communication device 500 may implement the corresponding processes implemented by the receiving-side device in various methods of the embodiments of the present disclosure, which will not be repeated here for the sake of brevity.

In some embodiments, the communication device 500 may specifically be the transmitting-side device of the embodiments of the present disclosure, and the communication device 500 may implement the corresponding processes implemented by the transmitting-side device in various methods of the embodiments of the present disclosure, which will not be repeated here for the sake of brevity.

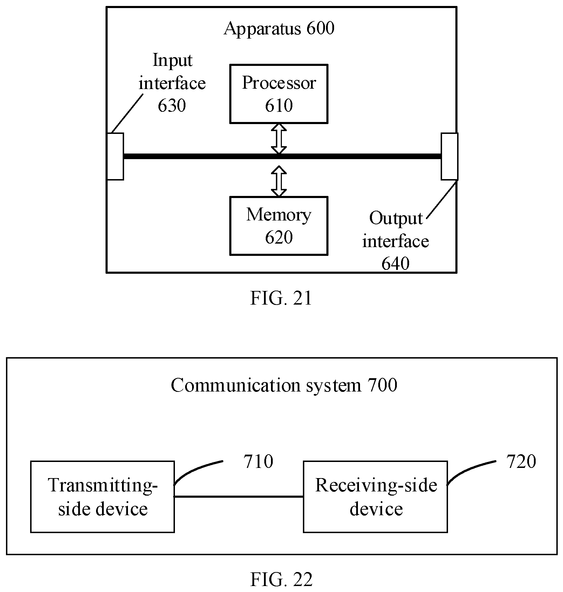

FIG. 21 is a schematic structural diagram of an apparatus according to the embodiments of the present disclosure. An apparatus 600 illustrated in FIG. 21 includes a processor 610, and the processor 610 may call a computer program from a memory and run the computer program, to implement the method in the embodiments of the present disclosure.

In some embodiments, as illustrated in FIG. 21, the apparatus 600 may also include a memory 620. Here, the processor 610 may call a computer program from the memory 620 and run the computer program, to implement the method in the embodiments of the present disclosure.

The memory 620 may be a separate device independent from the processor 610 or may be integrated into the processor 610.

In some embodiments, the apparatus 600 may further include an input interface 630. The processor 610 may control the input interface 630 to communicate with other devices or chips, and specifically, to obtain information or data transmitted by other devices or chips. Optionally, the processor 610 may be located on-chip or off-chip.

In some embodiments, the processor 610 may implement the functions of the processing unit in the transmitting-side device, or the processor 610 may implement the functions of the processing unit in the receiving-side device, which will not be repeated here for the sake of brevity.

In some embodiments, the input interface 630 may implement the functions of the communication unit in the transmitting-side device, or the input interface 630 may implement the functions of the communication unit in the receiving-side device.

In some embodiments, the apparatus 600 may further include an output interface 640. The processor 610 may control the output interface 640 to communicate with other devices or chips, and specifically, to output information or data to other devices or chips. Optionally, the processor 610 may be located on-chip or off-chip.

In some embodiments, the output interface 640 may implement the functions of the communication unit in the transmitting-side device, or the output interface 640 may implement the functions of the communication unit in the receiving-side device.

In some embodiments, the apparatus may be applied to the receiving-side device in the embodiments of the present disclosure, and the apparatus may implement the corresponding processes implemented by the receiving-side device in various methods of the embodiments of the present disclosure, which will not be repeated here, for the sake of brevity.

In some embodiments, the apparatus may be applied to the transmitting-side device in the embodiments of the present disclosure, and the apparatus may implement the corresponding processes implemented by the transmitting-side device in various methods in the embodiments of the present disclosure, which will not be repeated here for the sake of brevity.

In some embodiments, the apparatus mentioned in the embodiments of the present disclosure may also be a chip. For example, the chip may be a system-level chip, a system chip, a chip system or a system-on-chip.

FIG. 22 is a schematic block diagram of a communication system 700 provided in the embodiment of the present disclosure. As illustrated in FIG. 22, the communication system 700 includes a transmitting-side device 710 and a receiving-side device 720.

The transmitting-side device 710 may be configured to implement the corresponding functions implemented by the transmitting-side device in the above methods, and the receiving-side device 720 may be configured to implement the corresponding functions implemented by the receiving-side device in the above methods, which will not be repeated here for the sake of brevity.

It should be understood that the processor of the embodiments of the present disclosure may be an integrated circuit chip with signal processing capability. In the implementation process, each step of the above method embodiments may be completed by the instructions in the form of integrated logic circuit of hardware or software in the processor. The above processors may be a general purpose processor, a digital signal processor (DSP), an application specific integrated circuit (ASIC), a field programmable gate array (FPGA), other programmable logic device, a discrete gate, a transistor logic device, or a discrete hardware component, which may implement or execute the disclosed methods, steps and logic block diagrams in the embodiments of the present disclosure. The general purpose processor may be a microprocessor, or the processor may be any conventional processor, or the like. The steps of the methods disclosed in connection with the embodiments of the present disclosure may be directly embodied in the execution completion of the hardware decoding processor, or by the combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present disclosure may be a volatile memory or a non-volatile memory, or may include both the volatile memory and non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not a limitation for illustration, many forms of the RAM are available, such as, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct Rambus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present disclosure may also be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct Rambus random access memory (Direct Rambus RAM, DR RAM), etc. That is, the memory in the embodiments of the present disclosure is intended to include, but not limited to, these and any other suitable types of memories.

The embodiments of the present disclosure further provide a computer-readable storage medium for storing a computer program.

In some embodiments, the computer-readable storage medium may be applied to the receiving-side device in the embodiments of the present disclosure, and the computer program enables a computer to perform the corresponding processes implemented by the receiving-side device in various methods of the embodiments of the present disclosure, which will not be repeated here for the sake of brevity.

In some embodiments, the computer-readable storage medium may be applied to the transmitting-side device in the embodiments of the present disclosure, and the computer program enables a computer to perform the corresponding processes implemented by the transmitting-side device in various methods of the embodiments of the present disclosure, which will not be repeated here for the sake of brevity.

The embodiments of the present disclosure further provide a computer program product, and the computer program product includes computer program instructions.

In some embodiments, the computer program product may be applied to the receiving-side device in the embodiments of the present disclosure, and the computer program instructions enable a computer to perform the corresponding processes implemented by the receiving-side device in various methods of the embodiments of the present disclosure, which will not be repeated here for the sake of brevity.

In some embodiments, the computer program product may be applied to the transmitting-side device in the embodiments of the present disclosure, and the computer program instructions enable a computer to perform the corresponding processes implemented by the transmitting-side device in various methods of the embodiments of the present disclosure, which will not be repeated here for the sake of brevity.

The embodiments of the present disclosure further provide a computer program.

In some embodiments, the computer program may be applied to the receiving-side device in the embodiments of the present disclosure, and the computer program, when running on a computer, enables the computer to perform the corresponding processes implemented by the receiving-side device in various methods of the embodiments of the present disclosure, which will not be repeated here for the sake of brevity.

In some embodiments, the computer program may be applied to the transmitting-side device in the embodiments of the present disclosure, and the computer program, when running on a computer, enables the computer to perform the corresponding processes implemented by the transmitting-side device in various methods of the embodiments of the present disclosure, which will not be repeated here for the sake of brevity.

Those of ordinary skill in the art will appreciate that the units and algorithm operations of each example described in connection with the embodiments disclosed herein may be implemented by electronic hardware, or by the combination of computer software and electronic hardware. Whether these functions are performed in hardware or software depends on the specific application and design constraints of the technical solutions. A professional technician may use different methods to implement the described functions for each specific application, but such implementation is not considered to be beyond the scope of the present disclosure.

Those skilled in the art may clearly understand that for the convenience and brevity of the description, the specific working processes of the system, apparatus and unit described above may refer to the corresponding procedures in the embodiments of the method above, and will not be repeated herein.

In several embodiments provided according to the present disclosure, it should be understood that the disclosed system, apparatus and method may be implemented in other ways. For example, the embodiments of the apparatus described above are only schematic, for example, the division of the unit is only a logical functional division, and there may be another division way in the actual implementation, for example, multiple units or components may be combined or integrated into another system, or some features may be ignored or not implemented. On the other aspect, the mutual coupling or direct coupling or communication connection illustrated or discussed may be indirect coupling or communication connection through some interfaces, apparatus or units, and may be electrical, mechanical or other forms.

The units described as separation parts may or may not be physically separated, and the component displayed as a unit may be or may not be a physical unit, that is, it may be located at one place, or it may be distributed to multiple network units. Some or all of the units may be selected according to actual requirements to achieve the purpose of the schemes of the embodiments.

In addition, various functional units in each embodiment of the present disclosure may be integrated into one processing unit, various units may exist physically alone, or two or more units may be integrated into one unit.

If the function is implemented in the form of a software functional unit and is sold or used as an independent product, it can be stored in a computer readable storage medium. Based on such an understanding, the technical solutions of the present disclosure, in essence or the part that contributes to the prior art or the part of the technical solutions, may be embodied in the form of a software product, the computer software product is stored in a storage medium, includes multiple instructions for making a computer device (which may be a personal computer, a server, a network device, etc.) to perform all or part of the steps of the method according to each embodiment of the present disclosure. The aforementioned storage media includes a media that may store a program code, such as a U disk, a mobile hard disk, a read-only memory (ROM), a random access memory (RAM), a disk or an optical disk.

The foregoing descriptions are merely specific implementations of the present disclosure, but the protection scope of the present disclosure is not limited thereto. Any skilled person in the art could readily conceive of changes or replacements within the technical scope of the present disclosure, which shall be all included in the protection scope of the present disclosure. Therefore, the protection scope of the present disclosure shall be subject to the protection scope of claims.

**Claims**

1. A method for channel information feedback, comprising:

   encoding, by a transmitting-side device, first channel information through an encoding network, to obtain a first feedback bitstream; and transmitting, by the transmitting-side device, the first feedback bitstream to a receiving-side device;

   wherein the first channel information is channel information aligned with target channel information in a first dimension obtained after pre-processing is performed, and/or the first feedback bitstream is a feedback bitstream aligned with a target feedback bitstream obtained after post-processing is performed on a feedback bitstream output by the encoding network; and the first dimension is at least one of: a number of transmitting antenna ports, a number of subbands, a number of resource blocks (RBs), a number of delay paths, a number of symbols, or a number of slots.

2. The method according to claim 1, wherein under different physical resource configurations associated with channel information feedback and/or under different channel information feedback payload configurations, the encoding network is same or model weight parameters of the encoding network are same; and

the different physical resource configurations associated with channel information feedback are different in the first dimension.

3. The method according to claim 2, wherein in a case where the first channel information is the channel information aligned with the target channel information in the first dimension obtained after pre-processing is performed, the method further comprises:
   for M physical resource configurations associated with channel information feedback, performing, by the transmitting-side device, pre-processing on channel information corresponding to each of the M physical resource configurations to align the channel information corresponding to each of the M physical resource configurations with the target channel information in the first dimension, to obtain an input of the encoding network corresponding to each of the M physical resource configurations, wherein M is a positive integer, and M is larger than or equal to 2.

4. The method according to claim 2, wherein in a case where the first feedback bitstream is the feedback bitstream aligned with the target feedback bitstream obtained after post-processing is performed on the feedback bitstream output by the encoding network, the method further comprises:

   for N channel information feedback payload configurations, constructing, by the transmitting-side device, N encoding models and N decoding models, respectively, wherein the N encoding models correspond to the N decoding models, respectively, the N encoding models have a same model architecture, the N decoding models have a same model architecture, N is a positive integer, and N is larger than or equal to 2;
   performing, by the transmitting-side device, post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a corresponding decoding model;
   completing, by the transmitting-side device during a j-th training period of model training, training once on the i-th encoding model and a decoding model corresponding to the i-th encoding model, and then copying weight parameters of the i-th encoding model and weight parameters of the decoding model corresponding to the i-th encoding model to the (i+k)-th encoding model and a decoding model corresponding to the (i+k)-th encoding model, respectively; and completing, by the transmitting-side device during a (j+1)-th training period of model training, training once on the (i+k)-th encoding model and the decoding model corresponding to the (i+k)-th encoding model based on the copied weight parameters, and copying weight parameters of the (i+k)-th encoding model and weight parameters of the decoding model corresponding to the (i+k)-th encoding model to the i-th encoding model and the decoding model corresponding to the i-th encoding model, respectively;

wherein the i-th encoding model or the (i+k)-th encoding model after S training periods is the encoding network, the decoding model corresponding to the i-th encoding model or the decoding model corresponding to the (i+k)-th encoding model after the S training periods is a decoding network corresponding to the encoding network, i, j, k and S are all positive integers, and i plus k is less than or equal to N.

5. The method according to claim 4, further comprising: re-training, by the transmitting-side device, the decoding network corresponding to the encoding network based on the N channel information feedback payload configurations in a case where the encoding network remains unchanged.

6. The method according to claim 2, wherein in a case where the first feedback bitstream is the feedback bitstream aligned with the target feedback bitstream obtained after post-processing is performed on the feedback bitstream output by the encoding network, the method further comprises:

for N channel information feedback payload configurations, constructing, by the transmitting-side device, N encoding models, respectively, wherein the N encoding models have a same model architecture, N is a positive integer, and N is larger than or equal to 2;
performing, by the transmitting-side device, post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a decoding network;

completing, by the transmitting-side device during a j-th training period of model training, training once on the i-th encoding model, and then copying weight parameters of the i-th encoding model to the (i+k)-th encoding model; and completing, by the transmitting-side device during a (j+1)-th training period of model training, training once on the (i+k)-th encoding model based on the copied weight parameters, and copying weight parameters of the (i+k)-th encoding model to the i-th encoding model;
wherein the i-th encoding model or the (i+k)-th encoding model after S training periods is the encoding network, i, j, k, and S are all positive integers, and i plus k is less than or equal to N.

7. The method according to claim 2, wherein in a case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, the method further comprises:

for N channel information feedback payload configurations, constructing, by the transmitting-side device, N encoding models and N decoding models, respectively, wherein the N encoding models correspond to the N decoding models, respectively, the N encoding models have a same model architecture, the N decoding models have a same model architecture, N is a positive integer, and N is larger than or equal to 2;
for M physical resource configurations associated with channel information feedback, performing, by the transmitting-side device, pre-processing on channel information corresponding to each of the M physical resource configurations to align the channel information corresponding to each of the M physical resource configurations with the target channel information in the first dimension, to obtain inputs of the N encoding models corresponding to each of the M physical resource configurations, wherein M is a positive integer, and M is larger than or equal to 2;
performing, by the transmitting-side device, post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a corresponding decoding model;

completing, by the transmitting-side device during a j-th training period of model training, training once on the i-th encoding model and a decoding model corresponding to the i-th encoding model, and then copying weight parameters of the i-th encoding model and weight parameters of the decoding model corresponding to the i-th encoding model to the (i+k)-th encoding model and a decoding model corresponding to the (i+k)-th encoding model, respectively; and

completing, by the transmitting-side device during a (j+1)-th training period of model training, training once on the (i+k)-th encoding model and the decoding model corresponding to the (i+k)-th encoding model based on the copied weight parameters, and copying weight parameters of the (i+k)-th encoding model and weight parameters of the decoding model corresponding to the (i+k)-th encoding model to the i-th encoding model and the decoding model corresponding to the i-th encoding model, respectively;

wherein the i-th encoding model or the (i+k)-th encoding model after S training periods is the encoding network, and the decoding model corresponding to the i-th encoding model or the decoding model corresponding to the (i+k)-th encoding model after the S training periods is a decoding network corresponding to the encoding network, i, j, k and S are all positive integers, and i plus k is less than or equal to N.

8. The method according to claim 7, further comprising:
re-training, by the transmitting-side device, the decoding network corresponding to the encoding network based on the N channel information feedback payload configurations and the M physical resource configurations in a case where the encoding network remains unchanged.

9. The method according to claim 2, wherein in a case where the first channel information is the channel information aligned with the target channel information in the first dimension obtained after pre-processing is performed and the first feedback bitstream is the feedback bitstream aligned with the target feedback bitstream obtained after post-processing is performed on the feedback bitstream output by the encoding network, the method further comprises:

for N channel information feedback payload configurations, constructing, by the transmitting-side device, N encoding models, respectively, wherein the N encoding models have a same model architecture, N is a positive integer, and N is larger than or equal to 2;

for M physical resource configurations associated with channel information feedback, performing, by the transmitting-side device, preprocessing on channel information corresponding to each of the M physical resource configurations to align the channel information corresponding to each of the M physical resource configurations with the target channel information in the first dimension, to obtain inputs of the N encoding models corresponding to each of the M physical resource configurations, wherein M is a positive integer, and M is larger than or equal to 2;

performing, by the transmitting-side device, post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a decoding model;

completing, by the transmitting-side device during a j-th training period of model training, training once on the i-th encoding model, and then copying weight parameters of the i-th encoding model to the (i+k)-th encoding model; and

completing, by the transmitting-side device during a (j+1)-th training period of model training, training once on the (i+k)-th encoding model based on the copied weight parameter, and copying weight parameters of the (i+k)-th encoding model to the i-th encoding model;

wherein the i-th encoding model or the (i+k)-th encoding model after S training periods is the encoding network, i, j, k, and S are all positive integers, and i plus k is less than or equal to N.

10. The method according to any one of claims 1 to 9, wherein channel information is aligned with the target channel information by padding first placeholder information in the first dimension during pre-processing.

11. The method according to claim 10, wherein the first placeholder information is 0.

12. The method according to any one of claims 1 to 11, wherein a feedback bitstream is aligned with the target feedback bitstream by padding second placeholder information during post-processing, or a feedback bitstream is aligned with the target feedback bitstream by intercepting part of a bitstream during post-processing, or a feedback bitstream is aligned with the target feedback bitstream by deleting part of a bitstream during post-processing.

13. The method according to claim 12, wherein the second placeholder information is 0 or 1.

14. The method according to any one of claims 1 to 13, further comprising:

receiving, by the transmitting-side device, first information;
wherein the first information is used for indicating at least one of: physical resource configuration information associated with channel information feedback, or channel information feedback payload configuration information.

15. The method according to claim 14, wherein the first information comprises a first information field; and the first information field is used for jointly indicating the physical resource configuration information associated with channel information feedback and the channel information feedback payload configuration information.

16. The method according to claim 14, wherein the first information comprises a second information field and a third information field; and the second information field is used for indicating the physical resource configuration information associated with channel information feedback, and the third information field is used for indicating the channel information feedback payload configuration information.

17. The method according to any one of claims 14 to 16, wherein the first information is carried by at least one of following signaling: radio resource control (RRC) signaling, a media access control control element (MAC CE), downlink control information (DCI) or sidelink control information (SCI).

18. The method according to any one of claims 1 to 13, further comprising:

receiving, by the transmitting-side device, second information and third information;
wherein the second information is used for indicating physical resource configuration information associated with channel information feedback, and the third information is used for indicating channel information feedback payload configuration information.

19. The method according to claim 18, wherein the second information is carried by at least one of following signaling: RRC signaling, a MAC CE, DCI or SCI; and/or

the third information is carried by at least one of following signaling: RRC signaling, a MAC CE, DCI or SCI.

20. The method according to any one of claims 1 to 19, wherein the target channel information is maximum channel information in the first dimension among channel information corresponding to each of M physical resource configurations associated with channel information feedback, and/or the target feedback bitstream is a maximum or minimum feedback bitstream among feedback bitstreams corresponding to each of N channel information feedback payload configurations;
wherein different physical resource configurations among the M physical resource configurations are different in the first dimension, M and N are both positive integers, M is larger than or equal to 2, and N is larger than or equal to 2.

21. A method for channel information feedback, comprising:

receiving, by a receiving-side device, a first feedback bitstream transmitted by a transmitting-side device; and
decoding, by the receiving-side device, the first feedback bitstream through a decoding network, to obtain first channel information;
wherein the first feedback bitstream is a feedback bitstream aligned with a target feedback bitstream obtained after post-processing is performed on a feedback bitstream output by an encoding network corresponding to the decoding network, and/or the first channel information is channel information different from target channel information in a first dimension obtained after post-processing is performed on channel information that is output by the decoding network and aligned with the target channel information in the first dimension; and
the first dimension is at least one of: a number of transmitting antenna ports, a number of subbands, a number of resource blocks (RBs), a number of delay paths, a number of symbols, or a number of slots.

22. The method according to claim 21, wherein under different physical resource configurations associated with channel information feedback and/or under different channel information feedback payload configurations, the decoding network is same or model weight parameters of the decoding network are same; and
the different physical resource configurations associated with channel information feedback are different in the first dimension.

**23.** The method according to claim 22, wherein in a case where the first channel information is the channel information different from the target channel information in the first dimension obtained after post-processing is performed on the channel information that is output by the decoding network and aligned with the target channel information in the first dimension, the method further comprises:

for M physical resource configurations associated with channel information feedback, performing, by the receiving-side device, post-processing on channel information output by the decoding network, aligned with the target channel information in the first dimension and corresponding to each of the M physical resource configurations to delete first placeholder information in the channel information output by the decoding network and corresponding to each of the M physical resource configurations, to obtain channel information different from the target channel information in the first dimension and corresponding to each of the M physical resource configurations;

wherein an input of the encoding network corresponding to each of the M physical resource configurations is obtained by padding the first placeholder information to the channel information corresponding to each of the M physical resource configurations in the first dimension, M is a positive integer and M is larger than or equal to 2.

**24.** The method according to claim 22, wherein in a case where the first feedback bitstream is the feedback bitstream aligned with the target feedback bitstream obtained after post-processing is performed on the feedback bitstream output by the encoding network corresponding to the decoding network, the method further comprises:

for N channel information feedback payload configurations, constructing, by the receiving-side device, N encoding models and N decoding models, respectively, wherein the N encoding models correspond to the N decoding models, respectively, the N encoding models have a same model architecture, the N decoding models have a same model architecture, N is a positive integer, and N is larger than or equal to 2;

performing, by the receiving-side device, post-processing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a corresponding decoding model;

completing, by the receiving-side device during a j-th training period of model training, training once on the i-th encoding model and a decoding model corresponding to the i-th encoding model, and then copying weight parameters of the i-th encoding model and weight parameters of the decoding model corresponding to the i-th encoding model to the (i+k)-th encoding model and a decoding model corresponding to the (i+k)-th encoding model, respectively; and

completing, by the receiving-side device during a (j+1)-th training period of model training, training once on the (i+k)-th encoding model and the decoding model corresponding to the (i+k)-th encoding model based on the copied weight parameters, and copying weight parameters of the (i+k)-th encoding model and weight parameters of the decoding model corresponding to the (i+k)-th encoding model to the i-th encoding model and the decoding model corresponding to the i-th encoding model, respectively;

wherein the i-th encoding model or the (i+k)-th encoding model after S training periods is the encoding network corresponding to the decoding network, the decoding model corresponding to the i-th encoding model or the decoding model corresponding to the (i+k)-th encoding model after the S training periods is the decoding network, i, j, k and S are all positive integers, and i plus k is less than or equal to N.

**25.** The method according to claim 24, further comprising:
re-training, by the receiving-side device, the encoding network corresponding to the decoding network based on the N channel information feedback payload configurations in a case where the decoding network remains unchanged.

**26.** The method according to claim 22, wherein in a case where the first feedback bitstream is the feedback bitstream aligned with the target feedback bitstream obtained after post-processing is performed on the feedback bitstream output by the encoding network corresponding to the decoding network, the method further comprises:

for N channel information feedback payload configurations, constructing, by the receiving-side device, N decoding models, respectively, wherein the N decoding models have a same model architecture, N is a positive integer, and N is larger than or equal to 2;

aligning, by the receiving-side device, a feedback bitstream corresponding to an i-th decoding model with the target feedback bitstream, aligning, by the receiving-side device, a feedback bitstream corresponding to an (i+k)-th decoding model with the target feedback bitstream, and inputting, by the transmitting-side device, each feedback bitstream aligned with the target feedback bitstream into a corresponding decoding model;

completing, by the receiving-side device during a j-th training period of model training, training once on the i-th decoding model, and then copying weight parameters of the i-th decoding model to the (i+k)-th decoding model; and

completing, by the receiving-side device during a (j+1)-th training period of model training, training once on the (i+k)-th decoding model based on the copied weight parameters, and copying weight parameters of the (i+k)-th decoding model to the i-th decoding model;

wherein the i-th decoding model or the (i+k)-th decoding model after S training periods is the decoding network, i, j, k and S are all positive integers, and i plus k is less than or equal to N.

27. The method according to claim 22, wherein in a case where the first feedback bitstream is the feedback bitstream aligned with the target feedback bitstream obtained after post-processing is performed on the feedback bitstream output by the encoding network corresponding to the decoding network, and the first channel information is the channel information different from the target channel information in the first dimension obtained after post-processing is performed on the channel information that is output by the decoding network and aligned with the target channel information in the first dimension, the method further comprises:

for N channel information feedback payload configurations, constructing, by the receiving-side device, N encoding models and N decoding models, respectively, wherein the N encoding models correspond to the N decoding models, respectively, the N encoding models have a same model architecture, the N decoding models have a same model architecture, N is a positive integer, and N is larger than or equal to 2;

for M physical resource configurations associated with channel information feedback, performing, by the receiving-side device, pre-processing on channel information corresponding to each of the M physical resource configurations to align the channel information corresponding to each of the M physical resource configurations with the target channel information in the first dimension, to obtain inputs of the N encoding models corresponding to each of the M physical resource configurations, wherein M is a positive integer, and M is larger than or equal to 2;

performing, by the receiving-side device, postprocessing on a feedback bitstream output by an i-th encoding model and a feedback bitstream output by an (i+k)-th encoding model, to align the feedback bitstream output by the i-th encoding model with the target feedback bitstream and align the feedback bitstream output by the (i+k)-th encoding model with the target feedback bitstream, and inputting, by the transmitting-side device, each feedback bitstream aligned with the target feedback bitstream into a corresponding decoding model;

completing, by the receiving-side device during a j-th training period of model training, training once on the i-th encoding model and a decoding model corresponding to the i-th encoding model, and then copying weight parameters of the i-th encoding model and weight parameters of the decoding model corresponding to the i-th encoding model to the (i+k)-th encoding model and a decoding model corresponding to the (i+k)-th encoding model, respectively; and

completing, by the receiving-side device during a (j+1)-th training period of model training, training once on the (i+k)-th encoding model and the decoding model corresponding to the (i+k)-th encoding model based on the copied weight parameters, and copying weight parameters of the (i+k)-th encoding model and weight parameters of the decoding model corresponding to the (i+k)-th encoding model to the i-th encoding model and the decoding model corresponding to the i-th encoding model, respectively;

wherein the i-th encoding model or the (i+k)-th encoding model after S training periods is the encoding network corresponding to the decoding network, and the decoding model corresponding to the i-th encoding model or the decoding model corresponding to the (i+k)-th encoding model after the S training periods is the decoding network, i, j, k and S are all positive integers, and i plus k is less than or equal to N.

28. The method according to claim 27, further comprises:
re-training, by the receiving-side device, the encoding network corresponding to the decoding network based on the N channel information feedback payload configurations and the M physical resource configurations in a case where the decoding network remains unchanged.

29. The method according to claim 22, wherein in a case where the first feedback bitstream is the feedback bitstream aligned with the target feedback bitstream obtained after post-processing is performed on the feedback bitstream output by the encoding network corresponding to the decoding network, and the first channel information is the channel information different from the target channel information in the first dimension obtained after post-processing is performed on the channel information that is output by the decoding network and aligned with the target channel information in the first dimension, the method further comprises:

for N channel information feedback payload configurations, constructing, by the receiving-side device, N decoding models, respectively, wherein the N decoding models have a same model architecture, N is a positive integer, and N is larger than or equal to 2;

for M physical resource configurations associated with channel information feedback, performing, by the receiving-side device, pre-processing on channel information corresponding to each of the M physical resource configurations to align the channel information corresponding to each of the M physical resource configurations with the target channel information in the first dimension, to obtain an input of the encoding network corresponding to each of the M physical resource configurations, wherein M is a positive integer, and M is larger than or equal to 2;

aligning, by the receiving-side device, a feedback bitstream corresponding to an i-th decoding model with the target feedback bitstream, aligning, by the receiving-side device, a feedback bitstream corresponding to an (i+k)-th decoding model with the target feedback bitstream, and inputting, by the transmitting-side device, each feedback bitstream aligned with the target feedback bitstream into a corresponding decoding model;

completing, by the receiving-side device during a j-th training period of model training, training once on the i-th decoding model, and then copying weight parameters of the i-th decoding model to the (i+k)-th decoding model; and

completing, by the receiving-side device during a (j+1)-th training period of model training, training once on the (i+k)-th decoding model based on the copied weight parameter, and copying weight parameters of the (i+k)-th decoding model to the i-th decoding model;

wherein the i-th decoding model or the (i+k)-th decoding model after S training periods is the decoding network, i, j, k and S are all positive integers, and i plus k is less than or equal to N.

30. The method according to any one of claims 21 to 29, wherein channel information is aligned with the target channel information by padding first placeholder information in the first dimension during pre-processing; and
the channel information is channel information different from the target channel information in the first dimension obtained by deleting the first placeholder information in the first dimension during post-processing.

31. The method according to claim 23 or 30, wherein the first placeholder information is 0.

32. The method according to any one of claims 21 to 31, wherein a feedback bitstream is aligned with the target feedback bitstream by padding second placeholder information during post-processing, or a feedback bitstream is aligned with the target feedback bitstream by intercepting part of a bitstream during post-processing, or a feedback bitstream is aligned with the target feedback bitstream by deleting part of a bitstream during post-processing.

33. The method according to claim 32, wherein the second placeholder information is 0 or 1.

34. The method according to any one of claims 21 to 33, further comprising:

transmitting, by the receiving-side device, first information;
wherein the first information is used for indicating at least one of: physical resource configuration information associated with channel information feedback, or channel information feedback payload configuration information.

35. The method according to claim 34, wherein the first information comprises a first information field; and
the first information field is used for jointly indicating the physical resource configuration information associated with channel information feedback and the channel information feedback payload configuration information.

36. The method according to claim 34, wherein the first information comprises a second information field and a third information field; and
the second information field is used for indicating the physical resource configuration information associated with channel information feedback, and the third information field is used for indicating the channel information feedback payload configuration information.

37. The method according to any one of claims 34 to 36, wherein the first information is carried by at least one of following signaling: radio resource control (RRC) signaling, a media access control control element (MAC CE), downlink control information (DCI) or sidelink control information (SCI).

38. The method according to any one of claims 21 to 33, further comprising:

    transmitting, by the receiving-side device, second information and third information;
    wherein the second information is used for indicating physical resource configuration information associated with channel information feedback, and the third information is used for indicating channel information feedback payload configuration information.

39. The method according to claim 38, wherein the second information is carried by at least one of following signaling: RRC signaling, a MAC CE, DCI or SCI; and/or
    the third information is carried by at least one of following signaling: RRC signaling, a MAC CE, DCI or SCI.

40. The method according to any one of claims 21 to 39, wherein the target channel information is maximum channel information in the first dimension among channel information corresponding to each of M physical resource configurations associated with channel information feedback, and/or the target feedback bitstream is a maximum or minimum feedback bitstream among feedback bitstreams corresponding to each of N channel information feedback payload configurations; and
    different physical resource configurations among the M physical resource configurations are different in the first dimension, M and N are both positive integers, M is larger than or equal to 2, and N is larger than or equal to 2.

41. A transmitting-side device, comprising:

    a processing unit, configured to encode first channel information through an encoding network, to obtain a first feedback bitstream; and
    a communicating unit, configured to transmit the first feedback bitstream to a receiving-side device;
    wherein the first channel information is channel information aligned with target channel information in a first dimension obtained after pre-processing is performed, and/or the first feedback bitstream is a feedback bitstream aligned with a target feedback bitstream obtained after post-processing is performed on feedback bitstream output by the encoding network; and
    the first dimension is at least one of: a number of transmitting antenna ports, a number of subbands, a number of resource blocks (RBs), a number of delay paths, a number of symbols, or a number of slots.

42. A receiving-side device, comprising:

    a communicating unit, configured to receive a first feedback bitstream transmitted by a transmitting-side device; and
    a processing unit, configured to decode the first feedback bitstream through a decoding network, to obtain first channel information;
    wherein the first feedback bitstream is a feedback bitstream aligned with a target feedback bitstream obtained after post-processing is performed on feedback bitstream output by an encoding network corresponding to the decoding network, and/or the first channel information is channel information different from target channel information in a first dimension obtained after post-processing is performed on channel information that is output by the decoding network and aligned with the target channel information in the first dimension; and
    the first dimension is at least one of: a number of transmitting antenna ports, a number of subbands, a number of resource blocks (RBs), a number of delay paths, a number of symbols, or a number of slots.

43. A transmitting-side device, comprising: a processor and a memory, wherein the memory is configured to store a computer program, and the processor is configured to call the computer program stored in the memory and run the computer program, to enable the transmitting-side device to perform the method in any one of claims 1 to 20.

44. A receiving-side device, comprising: a processor and a memory, wherein the memory is configured to store a computer program, and the processor is configured to call the computer program stored in the memory and run the computer program, to enable the receiving-side device to perform the method in any one of claims 21 to 40.

45. A chip, comprising: a processor, configured to call a computer program from a memory and run the computer program, to enable a device equipped with the chip to perform the method in any one of claims 1 to 20.

46. A chip, comprising: a processor, configured to call a computer program from a memory and run the computer program, to enable a device equipped with the chip to perform the method in any one of claims 21 to 40.

**47.** A computer-readable storage medium, configured to store a computer program, wherein the computer program, when is executed, implements the method of any one of claims 1 to 20.

**48.** A computer-readable storage medium, configured to store a computer program, wherein the computer program, when is executed, implements the method in any one of claims 21 to 40.

**49.** A computer program product, comprising computer program instructions, wherein the computer program instructions, when are executed, implement the method in any one of claims 1 to 20.

**50.** A computer program product, comprising computer program instructions, wherein the computer program instructions, when are executed, implement the method in any one of claims 21 to.

**51.** A computer program, wherein the computer program, when is executed, implements the method in any one of claims 1 to.

**52.** A computer program, wherein the computer program, when is executed, implements the method in any one of claims 21 to 40.

<u>100</u>

FIG. 1

FIG. 2

Input layer          Hidden layer          Output layer

FIG. 3

Input layer    Convolutional layer    Pooling layer    Convolutional layer    Pooling layer    Fully connected layer    Output layer

FIG. 4

FIG. 5

FIG. 6

**200**

```
┌─────────────────┐                              ┌─────────────────┐
│ Transmitting-   │                              │ Receiving-      │
│ side device     │                              │ side device     │
└─────────────────┘                              └─────────────────┘
```

S210, the transmitting-side device encodes first channel information through an encoding network, to obtain a first feedback bitstream

S220, the transmitting-side device transmits the first feedback bitstream to a receiving-side device; where the first channel information is channel information aligned with target channel information in a first dimension obtained after pre-processing is performed, and/or the first feedback bitstream is a feedback bitstream aligned with a target feedback bitstream obtained after post-processing is performed on a feedback bitstream output by the encoding network; and the first dimension is at least one of: a number of transmitting antenna ports, a number of sub-bands, a number of RBs, a number of delay paths, a number of symbols, or a number of slots

S230, the receiving-side device receives the first feedback bitstream transmitted by the transmitting-side device

S240, the receiving-side device decodes the first feedback bitstream through a decoding network, to obtain the first channel information; where the first feedback bitstream is a feedback bitstream aligned with a target feedback bitstream obtained after post-processing is performed on a feedback bitstream output by an encoding network corresponding to the decoding network, and/or the first channel information is channel information different from target channel information in a first dimension obtained after post-processing is performed on channel information that is output by the decoding network and aligned with the target channel information in the first dimension

FIG. 7

FIG. 8

FIG. 9

FIG. 10

FIG. 11

FIG. 12

FIG. 13

Dataset
Config1

Dataset
Config1

Dataset
Config2
0-Padding pre-
processing

Dataset
Config2
0-Padding pre-
processing

Encoding
network

Payload1

Decoding network1
Config1-Payload1

0-Padding
Payload2

Decoding network2
Config1-Payload2

Payload1

Decoding network3
Config2-Payload1

0-Padding
Payload2

Decoding network4
Config2-Payload2

FIG. 14

Model1

Dataset
Config1

Encoding
model

Payload1

Decoding
network1

(j+1)-th
epoch

j-th epoch

Dataset
Config2
0-padding pre-
processing

Encoding
model

0-Padding

Decoding
network2

Payload2

Model2

Model
weight
copying

FIG. 15

Dataset Config1 → Encoding network1 Config1-Payload1 → Payload1

Dataset Config1 → Encoding network2 Config1-Payload2 → 0-Padding Payload 2

Dataset Config2 0-padding pre-processing → Encoding network3 Config2-Payload1 → Payload1

Dataset Config2 0-padding pre-processing → Encoding network4 Config2-Payload2 → 0-Padding Payload2

→ Decoding network

**FIG. 16**

Dataset Config1 → Encoding network1 → Payload1 → Decoding model → Model1

Dataset Config2 0-Padding pre-processing → Encoding network2 → 0-Padding Payload2 → Decoding model → Model2

(j+1)-th epoch

j-th epoch

Model weight copying

**FIG. 17**

Transmitting-side device
300

Processing unit 310

Communication unit 320

FIG. 18

Receiving-side device 400

Communication 410

Processing unit 420

FIG. 19

Communication device 500

Memory
520

Processor
510

Transceiver
530

FIG. 20

Apparatus 600

Input
interface
630

Processor
610

Memory
620

Output
interface
640

FIG. 21

Communication system 700

Transmitting-
side device

710

Receiving-side
device

720

FIG. 22

# INTERNATIONAL SEARCH REPORT

| International application No. |
|---|
| **PCT/CN2022/125500** |

### A. CLASSIFICATION OF SUBJECT MATTER

H04L27/00(2006.01)i

According to International Patent Classification (IPC) or to both national classification and IPC

### B. FIELDS SEARCHED

Minimum documentation searched (classification system followed by classification symbols)

IPC: H04L, H04W, H04B, H04J

Documentation searched other than minimum documentation to the extent that such documents are included in the fields searched

Electronic data base consulted during the international search (name of data base and, where practicable, search terms used)

CNTXT; ENTXT; 3GPP; CJFD; VEN: 比特流, 编码, 端口数, 对齐, 符号数, 时隙数, 信道, 信息反馈, 延迟径数, 资源块数, 子带数; bitstream, feedback, port, align, channel, RB, time slot, delay

### C. DOCUMENTS CONSIDERED TO BE RELEVANT

| Category* | Citation of document, with indication, where appropriate, of the relevant passages | Relevant to claim No. |
|---|---|---|
| A | CN 115001629 A (TSINGHUA UNIVERSITY) 02 September 2022 (2022-09-02) description, paragraphs [0049]-[0153], and figures 1-9 | 1-52 |
| A | CN 107370585 A (HUAWEI TECHNOLOGIES CO., LTD.) 21 November 2017 (2017-11-21) entire document | 1-52 |
| A | CN 112567645 A (LG ELECTRONICS INC.) 26 March 2021 (2021-03-26) entire document | 1-52 |
| A | CN 113302868 A (APPLE INC.) 24 August 2021 (2021-08-24) entire document | 1-52 |
| A | CN 113517947 A (HUAWEI TECHNOLOGIES CO., LTD.) 19 October 2021 (2021-10-19) entire document | 1-52 |
| A | US 2021273707 A1 (QUALCOMM INC.) 02 September 2021 (2021-09-02) entire document | 1-52 |
| A | WO 2019039742 A1 (SAMSUNG ELECTRONICS CO., LTD.) 28 February 2019 (2019-02-28) entire document | 1-52 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 June 2023** | **04 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/125500** |

### C. DOCUMENTS CONSIDERED TO BE RELEVANT

| Category* | Citation of document, with indication, where appropriate, of the relevant passages | Relevant to claim No. |
|---|---|---|
| A | WO 2021220073 A1 (LENOVO SINGAPORE PTE LTD.) 04 November 2021 (2021-11-04) entire document | 1-52 |

Form PCT/ISA/210 (second sheet) (July 2022)

## INTERNATIONAL SEARCH REPORT
### Information on patent family members

International application No.

**PCT/CN2022/125500**

| Patent document cited in search report | | | Publication date (day/month/year) | Patent family member(s) | | | Publication date (day/month/year) |
|---|---|---|---|---|---|---|---|
| CN | 115001629 | A | 02 September 2022 | None | | | |
| CN | 107370585 | A | 21 November 2017 | US | 2019081760 | A1 | 14 March 2019 |
| | | | | US | 10924244 | B2 | 16 February 2021 |
| | | | | EP | 3447957 | A1 | 27 February 2019 |
| | | | | EP | 3447957 | A4 | 08 May 2019 |
| | | | | WO | 2017193975 | A1 | 16 November 2017 |
| CN | 112567645 | A | 26 March 2021 | DE | 112019003523 | T5 | 27 May 2021 |
| | | | | US | 2021297135 | A1 | 23 September 2021 |
| | | | | WO | 2020032621 | A1 | 13 February 2020 |
| CN | 113302868 | A | 24 August 2021 | WO | 2020146643 | A1 | 16 July 2020 |
| | | | | EP | 3900253 | A1 | 27 October 2021 |
| | | | | US | 2022086824 | A1 | 17 March 2022 |
| CN | 113517947 | A | 19 October 2021 | None | | | |
| US | 2021273707 | A1 | 02 September 2021 | WO | 2021173331 | A1 | 02 September 2021 |
| | | | | EP | 4111599 | A1 | 04 January 2023 |
| WO | 2019039742 | A1 | 28 February 2019 | US | 2019068314 | A1 | 28 February 2019 |
| | | | | US | 10868635 | B2 | 15 December 2020 |
| | | | | KR | 20190021096 | A | 05 March 2019 |
| | | | | KR | 102403066 | B1 | 27 May 2022 |
| | | | | EP | 3610593 | A1 | 19 February 2020 |
| | | | | EP | 3610593 | A4 | 22 April 2020 |
| | | | | EP | 3610593 | B1 | 27 October 2021 |
| WO | 2021220073 | A1 | 04 November 2021 | US | 2021344471 | A1 | 04 November 2021 |
| | | | | US | 11522662 | B2 | 06 December 2022 |

Form PCT/ISA/210 (patent family annex) (July 2022)